(19) Europäisches Patentamt

European Patent Office

Office européen des brevets

(11) **EP 0 960 448 B1**

(12) **EUROPÄISCHE PATENTSCHRIFT**

(45) Veröffentlichungstag und Bekanntmachung des Hinweises auf die Patenterteilung:
**10.04.2002  Patentblatt 2002/15**

(51) Int Cl.⁷: **H01M 8/24**, H01M 8/02

(21) Anmeldenummer: **98900525.1**

(86) Internationale Anmeldenummer:
**PCT/CH98/00034**

(22) Anmeldetag: **29.01.1998**

(87) Internationale Veröffentlichungsnummer:
**WO 98/35398 (13.08.1998 Gazette 1998/32)**

(54) **BRENNSTOFFZELLENSTAPEL MIT FESTEN ELEKTROLYTEN UND DEREN ANORDNUNG**

FUEL CELL STACK WITH SOLID ELECTROLYTES AND THEIR ARRANGEMENT

PILE DE CELLULES A COMBUSTIBLE A ELECTROLYTES SOLIDES ET SON AGENCEMENT

(84) Benannte Vertragsstaaten:
**AT CH DE ES FR GB IT LI NL SE**

(30) Priorität: **11.02.1997  CH 29697**

(43) Veröffentlichungstag der Anmeldung:
**01.12.1999  Patentblatt 1999/48**

(73) Patentinhaber: **Fucellco, Incorporated Wilmington, Delaware 19801 (US)**

(72) Erfinder: **Bossel, Ulf G. 5452 Oberrohrdorf (CH)**

(74) Vertreter:
**EGLI-EUROPEAN PATENT ATTORNEYS
Horneggstrasse 4
Postfach 473
8034 Zürich (CH)**

(56) Entgegenhaltungen:
EP-A- 0 437 175          DE-A- 4 333 478
US-A- 3 861 959          US-A- 5 484 666
US-A- 5 514 486          US-A- 5 549 983

• **PATENT ABSTRACTS OF JAPAN vol. 015, no. 090 (E-1040), 5.März 1991 -& JP 02 304870 A (AGENCY OF IND SCIENCE & TECHNOL;OTHERS: 01), 18.Dezember 1990,**

## Beschreibung

Die Erfindung betrifft eine plattenförmige Brennstoffzelle zur Erzeugung von Gleichstrom durch elektrochemische Umsetzung von Wasserstoff und kohlenstoffhaltigen Brenngasen sowie eine tragbare Brennstoffzellenanordnung aus einem Stapel solcher vorzugsweise kreisrunden Brennstoffzellen mit einem Hochtemperatur-Keramik-Elektrolyt oder Niedertemperatur-Polymer-Elektrolyt. Die Brennstoffzeilenanordnung zeichnet sich durch eine hohe Leistungsdichte und Raumausnutzung sowie einen hohen Wirkungsgrad aus.

Brennstoffzellen mit Hochtemperatur-Keramik-Elektrolyt ebenso wie mit Niedertemperatur-Polymer-Elektrolyt sind elektrochemische Geräte, mit denen die chemische Energie eines Brennstoffs direkt in elektrischen Gleichstrom umgewandelt werden kann. Entsprechende Vorrichtungen sind im Begriff, die industrielle Baureife zu erlangen. Dank ihrer Effizienz und Umweltfreundlichkeit könnten sie die klassischen thermischen Maschinen schon bald teilweise ersetzen.

Brennstoffzellen mit keramischen Feststoffelektrolyten sind seit längerer Zeit aus zahlreichen Veröffentlichungen bekannt. Für das Zusammenschalten einer Vielzahl von Brennstoffzellen wurden bereits viele, in der Geometrie voneinander abweichende Anordnungen vorgeschlagen. Es gibt röhren-, ring-, wellen- oder plattenförmige Konstruktionen. Letztere haben ihr Vorbild in der Filterpresse, wobei flache, ebene Bauelemente zu Stapeln aneinandergereiht sind und durch einen oder mehrere Zuganker miteinander verpresst werden.

In der Regel werden Brennstoffzellen mit Brennstoffüberschuss betrieben. Das nicht umgesetzte Gas muss hinter der Brennstoffzelle verbrannt werden. Hierfür werden die in der Gastechnik entwickelten Elemente wie elektrischer Zünder, Flammüberwacher und Notabschaltung verwendet.

Für die elektrische Stromübertragung von Zelle zu Zelle wurden viele Möglichkeiten untersucht. Angesichts der bei den Brennstoffzellen mit keramischen Feststoffelektrolyten hohen Betriebstemperaturen und der oxydierenden Atmosphäre auf der Sauerstoffseite ist dies keine leichte Aufgabe. Für plattenförmige Anordnungen erfolgt die Stromleitung in der Regel über Stromkollektoren senkrecht zur Plattenebene innerhalb des aktiven Raumes. Eine alternative Verbindung von Zelle zu Zelle mit metallischen Bindegliedern ausserhalb des aktiven Raumes der Zelle wurde z.B. in US-5,338,621 vorgeschlagen.

Einige dieser plattenförmigen Konfigurationen sind aus kreisförmigen Einzelzellen aufgebaut und beispielsweise aus EP-A-0 355 420, EP-A-0 437 175, US-5,399,442 bzw. DE 43 33 478, WO-A-86/06762, US-5,445,903 bekannt. Mit Brennstoff versorgt werden diese Einzelzellen in der Regel von innen durch mindestens einen Kanal, der durch hintereinander geschaltete Öffnungen gebildet wird. Dieser Kanal muss beim Durchgang durch die luftführenden Schichten gedichtet werden, wie z.B. aus EP-A-0 355 420 oder WO-A-86/06762 hervorgeht.

In EP-A-0 355 420, WO-A-86/06762 oder US-5,399,442 bzw. DE 43 33 478 wird beispielsweise das Oxidationsmittel Luft mit mindestens einem Kanal von innen zugeführt. Hier muss gegen einen Luftaustritt in die brennstofführenden Schichten abgedichtet werden.

Eine Ausführung ist aus EP-A-0 437 175 bekannt, bei der Reaktionsluft von aussen zugeführt wird. In der Regel sind die in der Zelle geführten Brennstoff- und Luftkanäle so abgedichtet, dass keines dieser Gase in den Gasraum des anderen gelangen kann.

Die Herstellung der keramischen Funktionsschichten Anode, Elektrolyt und Kathode durch Flamm- oder Plasmaspritzen auf poröse keramische oder metallische Substrate ist beispielsweise aus WO-A-86/06762 bekannt. Ferner sind geeignete Substrate, deren eine Oberfläche mit keramischem oder metallischem Material verdichtet ist, im Handel erhältlich. Zur industriellen Herstellung von Brennstoffzellen werden zum Beispiel Nickelfilzmatten eingesetzt, die auf einer Seite mit Nickelpulver abgedichtet sind. Auf die derart verdichtete Oberfläche werden die elektrolytischen Schichten durch physikalische Verfahren (Flammspritzen, Plasmaspritzen, Sputtering usw.) aufgetragen.

Ferner ist bei einer zylindrischen Anordnung der Einsatz eines einzigen Zugankers, der entlang der Zylinderachse angeordnet ist, Stand der Technik. In artverwandten Anordnungen (z. B. Mehrschichtfilter) findet man zentral angeordnete Zuganker. Auch der Einsatz von Federn zwischen Zuganker und Druckplatten zur Erzeugung eines auch bei unterschiedlichen Temperaturen nahezu konstanten Anpressdrucks ist bekannt und allgemeine Ingenieurpraxis. Aus US 5,514,486 sind Zuganker bei Brennstoffzellen bekannt, die aus einem einzigen soliden Material bestehen und ausschliesslich dem Zusammenpressen des Zellenstapels dienen. Sie sind stets gegen alle stromführenden Teile elektrisch isoliert.

Beispielsweise ebenfalls aus US 5,514,486 ist der Einsatz von Dow- oder Nafion-Membranen als Polymer-Elektrolytschicht bekannt. Gemäss dieser Schrift leitet man ein Reaktionsgas über einen zentralen Kanal zu und lässt es gegen die Peripherie des rotationssymmetrischen Brennstoffzellenstapels diffundieren, während das andere Reaktionsgas an der Peripherie in den Brennstoffzellenstapel eintritt und gegen das Zentrum diffundiert.

Ein Hauptproblem in einem Stapel von Brennstoffzellen ist die Leitung und Verteilung der Reaktionsgase. Um die Verteilung der Gase in einem zumindest annähernd rotationssymmetrischen Stapel zu beeinflussen, wurden Labyrinthe, wie z.B. in US-5,399,442 bzw. DE 43 33 478 oder EP 0 355 420 vorgeschlagen. Diese Labyrinthe bestehen im Wesentlichen aus radialen Durchlassen und tangentialen bzw. konzentrischen, teilkreisförmigen Kanälen, welche miteinander in Verbindung stehen.

Einerseits ist der Weg, ausgehend von einem zentrumsnahen Gebiet der Brennstoffzellen zu deren Peripherie, für die Reaktionsgase nicht stetig: Beispielsweise ist in Fig. 1 von EP 0 355 420 oder Fig. 8 von US-5,399,442 bzw. DE 43 33 478 ersichtlich, dass ein Gas infolge seiner radialen Bewegung im Bereich der radialen Durchlässe auf die - gegenüber der momentanen Bewegung, querstehenden - Seitenwälle der konzentrischen Kanäle prallt und entsprechend verwirbelt wird. Nach der Teilung des Gasstromes in zwei entgegengesetzte Richtungen prallen diese Teilströme jeweils in der Region des nächsten radialen Durchlasses auf einen benachbarten Teilstrom. Diese Vorgänge wiederholen sich, bis das Gas die Peripherie erreicht hat. Durch die komplizierte Bewegung der Gase ist aber keineswegs sichergestellt, dass eine gleichmässige Verteilung derselben erfolgt. So muss erwartet werden, dass das Verwirbeln der Gase beim Aufprallen auf Hindernisse bzw. beim Zusammenprallen mit anderen Teilströmen einen zufälligen Gasfluss bewirkt, der in einer von der optimal gleichmässigen Verteilung der Reaktionsgase stark abweichenden Gasverteilung resultiert. Dies kann dazu führen, dass örtliche Überhitzungen der Brennstoffzelle bzw. Brennstoffzellstapel auftreten. Solche sind bekanntlich dem einwandfreien Betrieb derselben äusserst abträglich. Auch können, infolge solcher Umlenkungen des Gasflusses, unerwünschte Druckverluste auftreten.

Andrerseits ist der Weg, ausgehend von einem zentrumsnahen Gebiet der Brennstoffzellen zu deren Peripherie, für die Reaktionsgase stetig: Beispielsweise ist in Fig. 5 von EP 0 355 420 ersichtlich, dass ein Gas eine radiale Bewegung von einem Bereich ausserhalb des Zentrums der Brennstoffzelle zu deren Peripherie ausführen soll. Durch diese exzentrische Anordnung des Gaseinlasses ist eine inhomogene Verteilung der Reaktionsgase zu erwarten. Zudem weiten sich bei dieser Ausführungsform die Kanäle zur Gasführung gegen die Peripherie stark aus, was - wegen der Zunahme des Stömungsquerschnittes - eine Verlangsamung des Gasstroms zur Folge.hat. Ein solche Verlangsamung ist aber nicht wünschenswert, weil diese zu einer starken Abnahme der Gasreaktion beiträgt. In EP 0 355 420 (Fig. 6) wurde auch eine alternative, stetige Gasführung vorgeschlagen, bei der sich die Reaktionsgase auf einer Spirale von einem zentrumsnahen Bereich gegen die Peripherie der Brennstoffzelle bewegen. Wohl ist nun eine stetige Bewegung erreicht; die Länge des Weges kann sich nun aber nachteilig auswirken: Wiederum resultiert eine starke Abnahme der Gasreaktion, da die Konzentration der unverbrauchten Gase selbstverständlich mit der Länge des zurückgelegten Weges abnimmt.

Als Aufgabe liegt der Erfindung, gemäss einem ersten Aspekt, das Vorschlagen einer leichten und kompakten Brennstoffzelle auf der Basis von Plattenelementen mit Hochtemperatur-Keramik-Elektrolyt oder Niedertemperatur-Polymer-Elektrolyt zugrunde. Gemäss einem zweiten Aspekt der Aufgabe soll aus den erfindungsgemässen Brennstoffzellen eine entsprechende Brennstoffzellenanordnung geschaffen werden. Dabei soll über eine möglichst stetige und eindeutige Zu- und Ableitung der gasförmigen Medien im Bereich der Elektroden - unter tunlichster Vermeidung von Richtungswechseln - eine gleichmässigere Reaktions- bzw. Stromverteilung innerhalb einer jeden Zelle und eine gleichmässige Stromübertragung zwischen zwei benachbarten Zellen senkrecht zur Plattenebene erzielt werden.

Erfindungsgemäss wird diese Aufgabe gemäss dem ersten Aspekt durch eine scheibenförmige Brennstoffzelle zur axialen Schichtung in einem Stapel gelöst. Der Stapel ist durch einen Zuganker fixiert und die Brennstoffzelle weist zur Aufnahme des Zugankers und zum Einlass eines ersten Gases eine Öffnung auf und ist dadurch gekennzeichnet, dass die Brennstoffzelle umfasst: Einen ionenleitenden Elektrolyten in der Form eines Hochtemperatur-Keramik-Elektrolyten oder eines Niedertemperatur-Polymer-Elektrolyten; eine poröse Kathodenschicht als Sauerstoffelektrode bzw. eine poröse Anodenschicht als Brennstoffelektrode auf je einer Seite des Elektrolyten; einen gasdurchlässigen Träger mit einer ersten und zweiten Oberfläche und Kanälen zur Leitung von Gasen; eine kleine Trennplatte, die zumindest teilweise auf der ersten Oberfläche des Trägers liegt; eine grosse, elektrisch leitende Trennplatte, die auf der zweiten Oberfläche des Trägers liegt und Mittel zur gezielten Leitung von Gasen umfasst, welche mit den Kanälen im Träger zusammenwirken.

Erfindungsgemäss wird diese Aufgabe gemäss dem zweiten Aspekt dadurch gelöst, dass eine Anordnung von Brennstoffzellen vorgeschlagen wird, die dadurch gekennzeichnet ist, dass die Brennstoffzellen axial geschichtet sind in einem Stapel, der mindestens durch einen - zwischen einer Anfangsund einer Endplatte wirkenden - Zuganker fixiert ist, wobei jeder Zuganker von zumindest einer elektrisch isolierenden Zentrierhülse so umgeben ist, dass der Raum zwischen dem Zuganker und der Hülse, sowie der Raum zwischen der Hülse und dem Rand eines - durch den Stapel von Brennstoffzellen gebildeten - Kanals für das erste Gas durchströmbar ist und dass der Raum, der durch die in einem Register übereinander platzierten Durchlasse in den gegenseitigen Berührungsbereichen der Trennplatten entsteht, für das zweite Gas in axialer Richtung durchströmbar ist.

Des Weiteren wird ein Verfahren zur Herstellung dieser Brennstoffzellen bzw. dieser Anordnung von Brennstoffzellen vorgeschlagen.

Die weitere Ausgestaltung der erfindungsgemässen Brennstoffzelle bzw. Brennstoffzellenanordnung ergibt sich aus den abhängigen Ansprüchen.

Beispielhafte Ausführungsformen sind in den Zeichnungen dargestellt. Dabei zeigen:

Fig. 1a                                eine Draufsicht auf einen Teil der Trennplatte einer Brennstoffzelle in Kombination mit einem unterlegten, gasdurchlässigen Träger, entsprechend einer ersten Ausführungsform;

Fig. 1b, c          Schnittdarstellungen einer Brennstoffzelle entsprechend der Schnittlinie A--O bzw. B--O in Fig. 1a;

Fig. 2          eine Schnittdarstellung einer stapelförmigen Anordnung von Brennstoffzellen mit eingezeichneten Gasströmen;

Fig. 3          Schnittdarstellung mit Montageschritten bei einer Brennstoffzelle mit einem Hochtemperatur-Keramik-Elektrolyten;

Fig. 4          Schnittdarstellung mit Montageschritten bei einer Brennstoffzelle mit einem Niedertemperatur-Polymer-Elektrolyten;

Fig. 5a-d          Schnittdarstellungen von alternativen Ausbildungen der Verbindung von grosser und kleiner Trennplatte;

Fig. 6          Ansicht und teilweise Schnittdarstellung einer zusammengebauten Anordnung von Brennstoffzellen;

Fig. 7          Schnittdarstellungen von alternativen Zentrierhülsen.

Fig. 8a, 9a, 10a, 11a, 12a, bzw. 13a          je eine Draufsicht auf einen Teil der grossen bzw. kleinen Trennplatte einer Brennstoffzelle in Kombination mit einem aufgelegten, gasdurchlässigen Träger, entsprechend einer zweiten bis siebten Ausführungsform;

Fig. 8b, 9b, 10b, 11b, 12b, bzw. 13b          je eine Schnittdarstellung einer Brennstoffzelle entsprechend der Schnittlinie A--O in Fig. 8a, 9a, 10a, 11a, 12a, bzw. 13a.

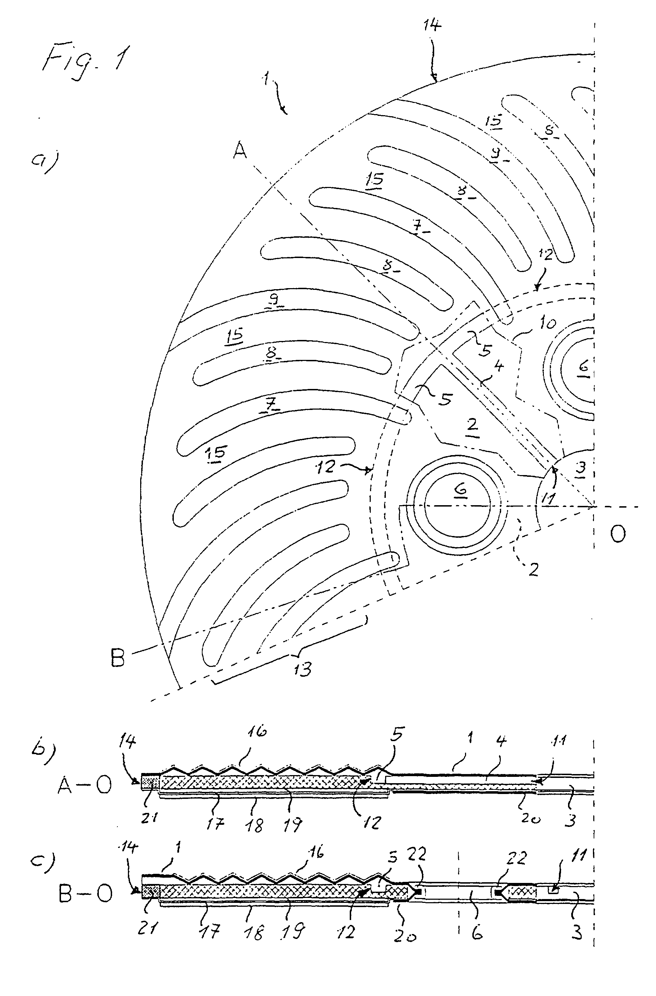

Fig. 1a zeigt eine grosse Trennplatte 1 in der Form einer kreisrunden Scheibe. Der Trennplatte 1 ist ein ebenfalls kreisscheibenförmiger, gasdurchlässiger Träger 2 unterlegt. Im gemeinsamen Zentrum der Trennplatte 1 und des Trägers 2 befindet sich eine vorzugsweise ebenfalls kreisförmige und konzentrisch angeordnete Öffnung 3. Zumindest ein radialer Kanal 4, der in den Träger 1 eingearbeitet ist, verbindet die zentrale Öffnung 3 mit einem ebenfalls in den Träger eingearbeiteten, ringförmigen Kanal 5. Sowohl die grosse Trennplatte 1 als auch der Träger 2 weisen im zentrumsnahen Bereich zumindest einen Durchlass 6 auf. Dabei sind Trennplatte 1 und Träger 2 vorzugsweise so aufeinander positioniert, dass jeweils ein runder Durchlass 6 in der Trennplatte 1 konzentrisch auf einen runden Durchlass 6 im Träger 2 zu liegen kommen. Die Trennplatte 1, der Träger 2, die Öffnung 3 und die Durchlasse 6 können eine von der Kreisrunden abweichende Form aufweisen. Sie können individuell oder gemeinsam z.B. auch eine polygonale, ovale, nierenförmige oder ellyptische Form oder eine Kombination von einer oder mehreren der bisher beschriebenen Formen aufweisen. Der hier dargestellte Träger 2 ist einstückig hergestellt. Eine weitere Ausführungsform umfasst die Ausbildung des Trägers 2 aus mehreren, vorzugsweise identischen Teilstücken.

Die Trennplatte 1 weist auf ihrer dem Träger 2 zugewandten Seite Kanäle oder Vertiefungen auf, die in Fig. 1a ausgezogen gezeichnet sind. Es handelt sich dabei um Mittel zur gezielten Leitung von Gasen, die hier eine Vielzahl von Zuströmkanälen 7, Druckausgleichskanälen 8 bzw. Abströmkanälen 9 umfassen. Ebenfalls ausgezogen gezeichnet ist der radiale Kanal 4 und ein Teil des Ringkanals 5 deshalb, weil sie im durch die Aufbruchlinie 10 begrenzten, aufgebrochen Bereich sichtbar sind.

Ein durch eine der Eintrittsöffnungen 11 aus der Öffnung 3 einströmendes, erstes Gas gelangt nun über einen der radialen Kanäle 4 in den ringförmigen Kanal 5, womit dieses erste Gas auf einer Front 12 verteilt wird. Jede Brennstoffzelle weist zumindest eine Eintrittsöffnung 11 auf, welche in einen radialen Kanal 4 mündet. Bevorzugt werden mehrere Eintrittsöffnungen 11 bzw. radiale Kanäle 4 pro Brennstoffzelle. In diesem Ausführungsbeispiel handelt es sich um vier Eintrittsöffnungen 11 pro Brennstoffzelle, welche in einem ringförmigen Kanal 5 münden, der eine kreisförmige, zum Zentrum der Brennstoffzelle konzentrische Front bildet. In weiteren Ausführungsformen können auch weniger oder mehr als vier radiale Kanäle pro Brennstoffzelle vorgesehen sein und diese Front kann, wie etwa die Trennplatte 1, der Träger 2, die Öffnung 3 und die Durchlasse 6 eine von der Kreisrunden abweichende Form aufweisen.

Von der Front 12 gelangt das erste Gas in die, den ringförmigen Kanal 5 übergreifenden und stumpf beginnenden Zuströmkanäle 7. Durch diese wird das erste Gas an dieser Front 12 übernommen und gezielt durch eine Diffusionszone 13 in Richtung der Peripherie 14 der Brennstoffzelle geleitet. Der äussere Rand der Diffusionszone 13 wird dabei im Wesentlichen durch die stumpfen Enden der Zuströmkanäle 7 definiert.

In einem Abstand von der Front 12 beginnen stumpf die Abströmkanäle 9, welche mit ihrem Anfang im Wesentlichen den inneren Rand der Diffusionszone 13 definieren. Die Abströmkanäle 9 leiten das im Wesentlichen verbrauchte erste Gas - ohne die Zuströmkanäle 7 zu berühren - gezielt an die Peripherie 14 der Brennstoffzelle, wo die ersteren offen enden. Im Bereich der Diffusionszone 13 können sich zwischen den Zuströmkanälen 7 und den Abströmkanälen 9 Druckausgleichskanäle 8 befinden. Diese beginnen vorteilhafterweise stumpf am inneren Rand der Diffusionszone und enden ebenfalls stumpf am äusseren Rand der Diffusionszone 13. Auf ihrem stetigen Weg durch die Diffusionszone 13 berühren die Druckausgleichskanäle 8 weder die Zuströmkanäle 7 noch die Abströmkanäle 9. In Fig. 1a liegt jeweils ein Druckausgleichskanal 8 zwischen einem Zuströmkanal 7 und einem Abströmkanal 9; es können aber auch 2, 3 oder mehr Druckausgleichskanäle 8 sein bzw. es kann auch ganz auf solche verzichtet werden.

Ist die Trennplatte 1 in Fig. 1a beispielsweise ein gestanztes, gepresstes oder sonstwie verformtes Blech, in das die Kanäle 7 bis 9 eingeformt sind, bilden diese Kanäle auf der vom Träger 2 abgewandten Seite der Trennplatte 1 Erhebungen oder Wälle. Diese Wälle sind voneinander beabstandet und lassen eine Vielzahl von Durchgangskanälen 15 frei, welche als Mittel zur gezielten Leitung eines zweiten Gases dienen. Eine günstige Gasverteilung in der Diffusionszone 13 wurde erreicht, indem die Kanäle 7, 8 und 9 sowie 15 so ausgebildet wurden, dass ihr Verlauf in Polarkoordinaten nach der Formel

$$[1] \qquad \varphi = \pm\, A\, \{[(r/r_0)^2 -1]^{0.5} - B\, \arctan\, [(r/r_0)^2 -1]\}$$

beschrieben werden kann, wobei gilt: A > 0 (nicht streng radial verlaufend) und B > 0 (nicht streng kreisförmig verlaufend), so dass sich ein Drehsinn der Gesamtheit der Linien ergibt.

In der Formel [1] bedeuten:

$\varphi$ = Winkel von einer durch den Ursprung führenden Bezugslinie aus gemessen

$r$ = vom Ursprung gemessener, variabler Radius

$r_0$ = von Ursprung gemessener Bezugsradius

Vorteilhaft war ein Verlauf dieser Kanäle 7 bis 9 und 15 so, dass in der Formel [1] gilt: 0 < A < 2 und 0 < B < 2. Als besonders vorteilhaft stellt sich eine Ausführungsform der grossen Trennplatte 1 heraus, bei der die Zuströmkanäle 7, die Druckausgleichskanäle 8, die Abströmkanäle 9 und die Durchgangskanäle 15 - also alle Mittel zur gezielten Leitung von Gasen - entlang von Linien verlaufen, die durch die Kreisevolvente, Formel [1] mit A = 1 und B = 1, beschrieben werden kann. Diese Linien verlaufen trotz ihrer Krümmung stets in gleichbleibendem Abstand zueinander, so dass sich Strömungskanäle gleicher Breite ergeben. Die Brennstoffzellen können so gestapelt sein, dass der Drehsinn der Gesamtheit der gasleitenden Mittel 7, 8, 9, 15 einer Brennstoffzelle dem Drehsinn zumindest einer der Nachbarzellen entgegensteht oder zu diesem gleich verläuft. Als Ausgangsgeometrien für solche Kanalbilder können auch andere Geometrien, wie Ellypsen oder Polygone dienen, deren Evolventen ebenfalls gleichmässig voneinander beabstandete, unverzweigte Linien und damit Strömungskanäle gleicher Breite bilden können. Zum Umfang der Erfindung gehören selbstverständlich auch alle diese Kurven approximierenden stetigen und/oder unstetigen Linien, mit denen Kanäle zumindest annähernd gleichbleibender Breite bzw. Kanäle, deren Breite in Flussrichtung der Gase zunehmend konvergiert oder divergiert, beschrieben werden können.

Fig. 1b zeigt einen Querschnitt durch eine erfindungsgemässe Brennstoffzelle entlang der Schnittlinie A--O in Fig. 1a. Auf der dem Träger 2 abgewandten Seite der Trennplatte 1 ist eine für Sauerstoff undurchlässige, aber elektrisch leitende Schutzschicht 16 aufgetragen, welche aus Perowskit oder einem Edelmetall besteht und die Trennplatte 1 gegenüber den korrosiven zweiten Gasen, z.B. gegenüber $O_2$, schützen soll. Währenddem die grosse Trennplatte 1 auf einer zweiten Oberfläche des Trägers 1 liegt, befindet sich auf der ersten Oberfläche des Trägers 1, die aus den drei Lagen Anode 19, Elektrolyt 17 und Kathode 18 aufgebaute, elektrolytisch aktive Schicht. Die Anode 19 ist dabei dem Träger 2 zugewandt und mit diesem elektrisch verbunden. Bei einem Hochtemperatur-Keramik-Elektrolyten, z.B. aus dotiertem Zirkonoxid, ist die Verwendung eines Keramik-Metall-Gemisches, z.B. eines Nickel-Zirkonoxid-Cermets als Anode und eines Mischoxides oder Perowskites als Kathode gebräuchlich. Bei einem Niedertemperatur-Polymer-Elektrolyten, z.B. aus Nafion, sind in der Regel Anode und Kathode als dünne Platinschichten ausgebildet. Ergänzend dazu zeigt Fig. 1c einen Querschnitt durch eine Brennstoffzelle entlang der Schnittlinie B--O in Fig. 1a. Dieser Schnitt ist so gelegt, dass er nicht wie in Fig. 1b durch einen radialen Kanal 4 und die entsprechende Eintrittsöffnung 11 verläuft, sondern nach dem Schneiden der Front 12 und des ringförmigen Kanals 5 einen Durchlass 6 durchtrennt und im Zentrum der Brennstoffzelle und der Öffnung 3 endet. Der Träger ist vorzugsweise aus einem porösen, gasdurchlässigen und elektrisch leitenden Material, z.B. aus Metallfilz, Metallschaum oder einem Cermet hergestellt. Auf der gleichen ersten Seite des Trägers 2 wie der Elektrolyt 17 liegt auch eine kleine Trennplatte 20. Die grosse und kleine Trennplatte 1, 20 sind durch den dazwischen liegenden Träger 2 voneinander beabstandet. Nahe der Öffnung 3, welche allen diesen dreien gemeinsam ist, sind die beiden Trennplatten 1 und 20 so geformt, dass sie zumindest einen gegenseitigen Berührungsbereich 22 bilden und in diesem Berührungsbereich 22 zumindest einen Durchlass 6 zur Leitung eines zweiten Gases in axialer Richtung aufweisen. Selbstverständlich weist der Träger 2 in der Region dieser Berührungsbereiche der beiden Trennplatten Aussparungen auf. An seiner Peripherie 14 weist der Träger vorzugsweise einen Randbereich 21 auf, der wenigstens teilweise verdichtet ist und so das erste Gas an einem freien Austritt aus dem porösen, gasdurchlässigen Träger 2 hindert.

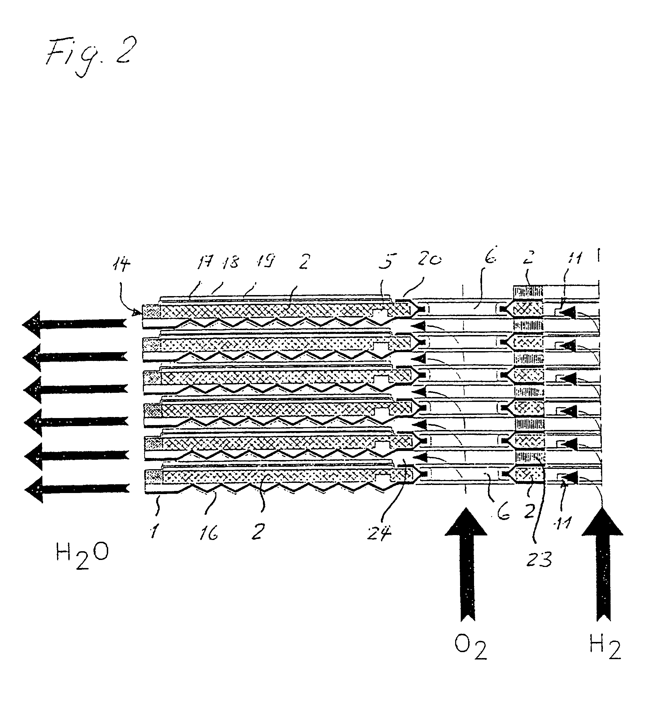

Fig. 2 zeigt eine Schnittdarstellung einer stapelförmigen Anordnung von Brennstoffzellen mit eingezeichneten Strömen eines ersten Gases, einem Brenngas (z.B. Wasserstoff, $H_2$), und eines zweiten Gases, einem Oxidationsmittel (z.B. Sauerstoff, $O_2$) sowie den Austritt des Reaktionsprodukts (z.B. Wasserdampf, $H_2O$). Gegenüber der Abbildung in Fig. 1b und 1c sind die Brennstoffzellen hier umgekehrt dargestellt, d.h. die Träger 2 liegen auf der grossen Trennplatte 1. Das Brenngas wird durch die zentral angeordneten Öffnungen 3 zugeführt. Diese Öffnungen bilden zusammen einen zentralen Kanal, der parallel zur Achse des Stapels von Brennstoffzellen bzw. der Brennstoffzellenanordnung verläuft. Durch die Eintrittsöffnungen 11 gelangt das Brenngas in die radialen Kanäle 4 und darauf in den ringförmigen Kanal 5, welche sämtliche in den Träger 3 eingearbeitet sind. Ab der Front 12 kann das Brenngas seinen Weg in radialer Richtung nur noch durch den porösen, gasdurchlässigen Träger 2 finden. Weil aber die Zuströmkanäle 7 in der grossen Trennplatte 1 den ringförmigen Kanal 5 und damit auch die Front 12 übergreifen, kann das Brenngas ungehindert in diese Zuströmkanäle 7 eintreten und wird durch diese gezielt und rasch in Richtung der Peripherie 14 weitergeleitet. Da aber diese Zuströmkanäle stumpf enden, entsteht in diesen ein leichter Überdruck im Brenngas, welcher bewirkt, dass das Brenngas entlang des ganzen Zuströmkanals 7 und auf beiden Seiten desselben in den gasdurchlässigen, porösen Träger 2 eintritt. Diese im Wesentlichen tangentiale, langsamere Bewegung setzt sich fort, bis das Brenngas in einen im Wesentlichen quer zu dieser Bewegung verlaufenden Druckausgleichskanal 8 einströmt. Nach dem Durchqueren des Druckausgleichskanals 8 - bzw. nach einer zu diesem im Wesentlichen parallelen und schnellen Bewegung innerhalb desselben gegen die Peripherie oder gegen das Zentrum des Stapels hin - tritt das Brenngas wieder in den gasdurchlässigen Träger 2 ein und strömt wiederum relativ langsam und im Wesentlichen quer zum Druckausgleichskanal 8, bis es in den Abströmkanal 9 eintritt und in diesem ungehindert und schnell gegen die Peripherie 14 fliessen und dort aus dem Stapel austreten kann. Die Bereiche, in denen das Brenngas langsam und im Wesentlilichen tangential fliesst, liegen im Wesentlichen zwischen dem inneren und äusseren Ende der Druckausgleichskanäle und werden hier als Diffusionszone 13 bezeichnet.

Beim Einsatz eines Hochtemperatur-Keramik-Elektrolyten kann das Brenngas z.B. Wasserstoff ($H_2$), Kohlenmonoxid (CO) oder Methan ($CH_4$) sein. Die Reaktion mit den von der Kathode kommenden Sauerstoffionen ($O^{--}$) findet in der porösen Anode statt. Die entstehenden Abgase, Wasserdampf ($H_2O$) oder Kohlendioxid ($CO_2$), bleiben also auf der Brenngasseite und strömen durch die Diffusionszone 13 zu den Abströmkanälen 9, durch welche sie, zusammen mit allfälligen Brenngasresten, die Brennstoffzelle an der Peripherie 14 verlassen.

Mit einem Niedertemperatur-Polymer-Elektrolyten kann jedoch nur Wasserstoff ($H_2$) umgesetzt werden. Dieser wandert in Form von Protonen ($H^+$) von der Anode der Elektrolytmembran zur Kathode, wo die Oxidation zu Wasserdampf ($H_2O$) erfolgt. Der Wasserdampf strömt zusammen mit der Restluft über die äussere Kanalstruktur, die Durchgangskanäle 15, zur Peripherie 14 der Brennstoffzelle. Ungenutzter Wasserstoff und etwaige Brenngasbeigaben oder Verunreinigungen gelangen durch die Diffusionszone 13 der Trägerplatte 2 zu den Abströmkanälen 9, durch welche sie die Brennstoffzelle an der Peripherie 14 verlassen.

Im Bereich dieser Peripherie 14 werden sowohl die Brenngase als auch die Abgase durch zumindest teilweise verdichtete Randbereiche 21 im Träger 2 am direkten Austritt aus den Brennstoffzellen gehindert oder zumindest behindert, so dass ein Gasfluss im Wesentlichen in Richtung Abströmkanäle 9 resuitiert. Selbstverständlich ist der Träger auch im Bereich der Kanäle 4 und 5 porös ausgebildet, so dass auch hier der Zugang des Brenngases zu der Anode gewährleistet ist; die ganze Diffusionszone 13 wird somit praktisch gleichmässig mit Brenngas versorgt, so dass eine gleichmässige Verteilung der Reaktion an der Anode und somit eine gleichmässige Stromverteilung in der Ebene einer Brennstoffzelle bzw. eine hohe mittlere Flächenleistung resultiert.

Die einzelnen Brennstoffzellen liegen so aufeinander, dass jeweils eine zwischen zwei Brennstoffzellen liegende, ringförmige Dichtung 23 den zentralen Kanal gegen die Peripherie hin abschliesst. Die beiden Gasräume werden also durch die Dichtung 23 - bzw. eine Vielzahl solcher Dichtungen 23 in einem Stapel - voneinander getrennt. Der so gebildete innere, erste Gasraum wird vom Brenngas durchströmt.

Das zweite Gas, z.B. der Sauerstoff ($O_2$) oder ein sauerstoffhaltiges Gas (Luft), wird durch die im zentrumsnahen Bereich angeordneten Durchlasse 6 den einzelnen Brennstoffzellen in einem Zellstapel zugeführt. Diese Durchlasse bilden jeweils zusammen einen Kanal, der parallel zur Achse des Stapels von Brennstoffzellen bzw. der Brennstoffzellenanordnung und ausserhalb der ringförmigen Dichtung 23 verläuft. Durch die freien Zwischenräume gelangt der Sauerstoff, der z.B. in reiner Form oder eben als Bestandteil der Umgebungsluft vorliegen kann - in die Durchgangskanäle 15, welche durch die Erhebungen in der grossen Trennplatte 1 und die den Erhebungen anliegende poröse Kathodenschicht definiert sind und in stetiger Linie gegen die Peripherie 14 der Brennstoffzellen verlaufen. Eine Vielzahl von Durchlassen 6 - im vorliegenden Ausführungsbeispiel auf einem Kreis konzentrisch zur zentralen Öffnung 3 angeordnet - ermöglicht eine intensive Versorgung aller Brennstoffzellen mit Sauerstoff. Vorzugsweise wird dieses zweite Reaktionsgas im Überschuss angeboten, so dass ein optimaler Wirkungsgrad durch eine maximale Reaktion des Brenngases erfolgt. Damit die grosse Trennplatte 1 gegen Oxidation geschützt ist, weist sie auf der Oberfläche, welche der Sauerstoffkathode zugewandt ist, eine für Sauerstoff undurchlässige, aber elektrisch leitende Schutzschicht 16 auf.

Grundsätzlich könnte das erste mit dem zweiten Gas vertauscht werden, so dass das Oxidationsmittel durch die zentrale Öffnung 3 und die Eintrittsöffnungen 11 in die radialen Kanäle 4 und den ringförmigen Kanal 5 zur Front 12 gelangen kann, wo es über die Zuströmkanäle 7, den Träger 2 und die Druckausgleichs- 8 und Abströmkanäle 9 zur Peripherie 14 der Brennstoffzelle geleitet wird. Das Brenngas würde dann durch die Durchlasse 6 in axialer Richtung fliessen und über die Durchgangskanäle 15 die Peripherie 14 erreichen. Selbstverständlich müssten dann auch die beiden Elektrodenschichten entsprechend vertauscht werden.

Eine weitere, alternative Gasführung umfasst die Zuleitung des zweiten Gases (Sauerstoff bzw. sauerstoffhaltiges Gas) über die Peripherie, wo es in die Durchführungskanäle 15 eintreten und diesen entlang - in umgekehrter Richtung - zu den Durchlassen 6 im Stapel gelangt, worauf es - nach dem Durchströmen der Durchlasse 6 in axialer Richtung - über den Anschluss 28 die Brennstoffzellenanordnung verlässt. Um den Fluss des zweiten Gases zu gewährleisten, wird beispielsweise der ganze Stapel von Brennstoffzellen in eine Druckkammer gestellt, womit ein freier Austritt des Oxidationsmittels in die Atmosphäre erfolgen kann. Über den Anschluss 28 kann das Oxidationsmittel auch abgesaugt werden.

Die Montage einer Brennstoffzelle umfasst die Verwendung von im Wesentlichen zwei Arten von Elektrolyten:

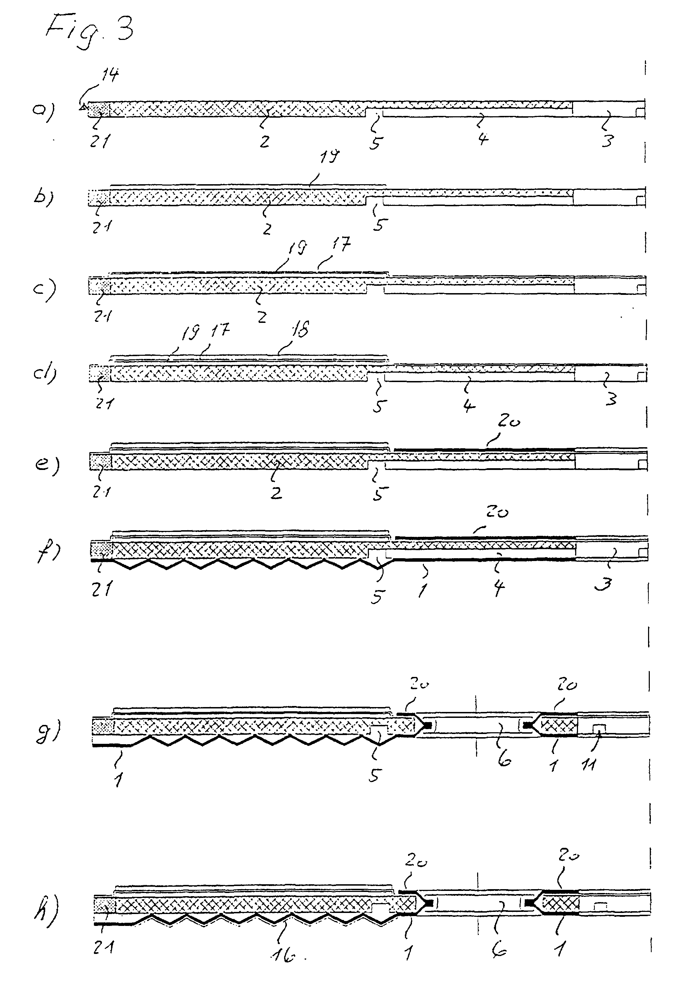

1. Hochtemperatur-Keramik-Elektrolyt (Fig. 3):

a) Ein poröser bzw. gasdurchlässiger Träger 2 aus z.B. gesintertem Metallpulver oder Mineralfaservlies wird auf die gewünschte Dicke und Form gebracht und stellt einen Stromkollektor (Brennstoffseite) mit einer gasdurchlässigen Metallschicht mit aufgesinterter, feinkörniger, aber offenporiger Oberfläche dar. Vorzugsweise handelt es sich dabei um Kreisscheiben, es könnten aber auch von der Kreisform abweichende Scheiben verwendet werden. Die Öffnung 3, die radialen Kanäle 4 und der ringförmige Kanal 5 sowie die Durchlasse 6 werden z.B. mittels Bohren, Fräsen, Pressen oder Stanzen in den Träger eingearbeitet, zudem wird in der Nähe der Peripherie 14 der Randbereich 21 zumindest teilweise verdichtet, was mittels Verpressen geschehen kann.

b) Eine poröse Anodenschicht 19 (Brennstoffelektrode) aus einem Metall/Metalloxid-Cermet wird im Bereich zwischen dem ringförmigen Kanal 5 und dem verdichteten Randbereich 21 mittels eines thermischen Verfahrens fest mit der feinkörnigen Oberflächenschicht des Trägers 2 verbunden.

c) Ein keramischer Feststoffelektrolyt 17 aus einem Sauerstoffionen leitenden, dotierten und stabilisierten Metalloxid wird - die Anodenschicht 19 und den restlichen Träger 2 überdeckend - aufgebracht.

d) Eine poröse Kathode 18 (Sauerstoffelektrode) z.B. aus einem dotierten Perowskit wird entsprechend dem Bereich der Brennstoffelektrode auf den Elektrolyten 17 aufgebracht.

e) Eine kleine Trennplatte 20 wird so aufgelegt, dass sie im Wesentlichen den inneren, von der Sauerstoffkathode nicht abgedeckten Bereich des Elektrolyten überdeckt, ohne jedoch die Sauerstoffkathode zu berühren.

f) Eine grosse Trennplatte 1 wird nun so unter den Träger 2 gelegt, dass die Kanäle 7 bis 9 auf die dem Träger zugewandten Seite zu liegen kommen. Diese Trennplatte ist z.B. als Blech ausgebildet und weist Wellen bzw. Rippen auf, so dass sie von innen nach aussen verlaufende Mittel zur gezielten Leitung von Gasen bildet. Die Trennplatte kann aber auch aus massivem Material bestehen, in das - mittels spanabhebender oder erodierender Bearbeitung auf einer oder beiden Seiten - Kanäle eingearbeitet sind.

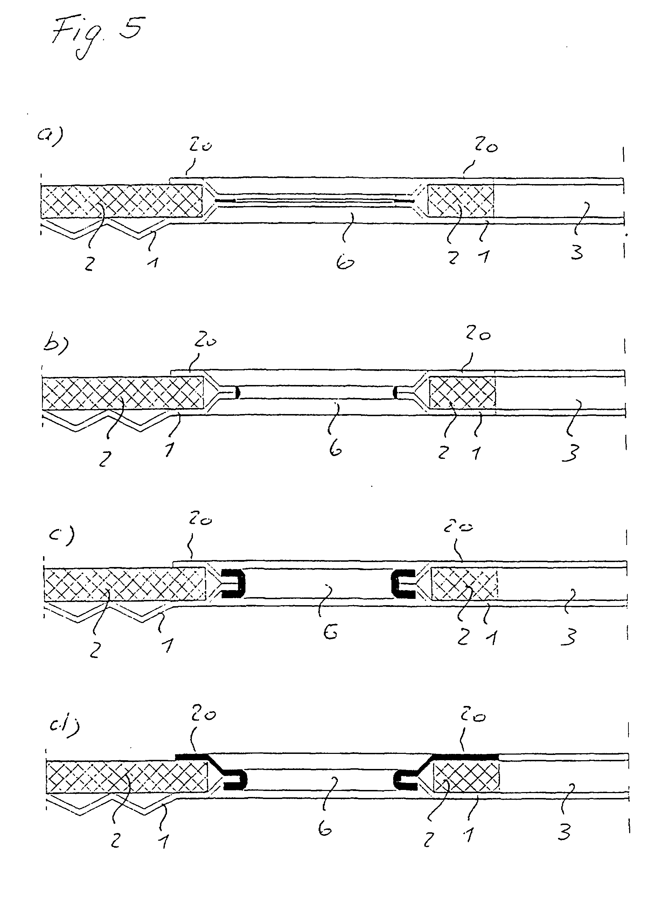

g) In den gegenseitigen Berührungsbereichen nahe der Öffnung 3 werden die grosse und kleine Trennplatte so miteinander verbunden, dass sie gemeinsam Durchlasse 6 bilden. Eine Auswahl von alternativen Verbindungsmöglichkeiten ist in Fig. 5 dargestellt.

h) Auf der vom Träger 2 abgewandten Seite der grossen Trennplatte 1 wird eine elektrisch leitende Korrosions- bzw. Oxidationsschutzschicht 16 aufgebracht, deren Oberfläche den Stromkollektor der Brennstoffzelle auf der Sauerstoffseite darstellt.

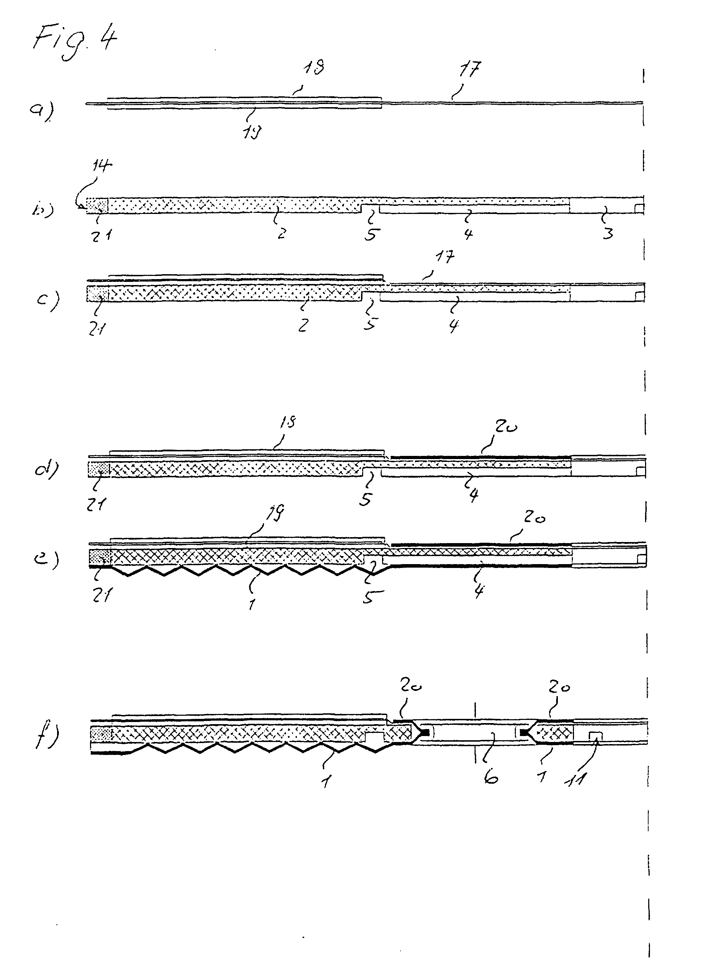

2. Niedertemperatur-Polymer-Elektrolyt (Fig. 4):

a) Eine Polymer-Membran z.B. aus Nafion (Dupont), welche als Wasserstoffionen (Protonen) leitender Polymerelektrolyt eingesetzt werden kann, wird auf eine Grösse und Form entsprechend dem Träger 2 in Fig. 3 gebracht. Vor dem Zusammenbau werden auf der Unterseite des Polymerelektrolyten 17 eine poröse Anodenschicht 19 (Brennstoffelektrode) und auf der Oberseite eine poröse Kathodenschicht 18 (Sauerstoffelektrode), beide vorzugsweise aus Platin, aufgebracht. Dies in dem Bereich, der demjenigen zwischen dem ringförmigen Kanal 5 und dem verdichteten Randbereich 21 des Trägers 2 entspricht.

b) Ein poröser bzw. gasdurchlässiger Träger 2 aus z.B. gesintertem Metallpulver, Metallfaservlies oder Metallschaum wird auf die gewünschte Dicke und Form gebracht und stellt einen Stromkollektor (Brennstoffseite) mit einer offenporigen Oberfläche dar. Vorzugsweise handelt es sich dabei um Kreisscheiben, es könnten aber auch von der Kreisform abweichende Scheiben verwendet werden. Die Öffnung 3, die radialen Kanäle 4 und der ringförmige Kanal 5 sowie die Durchlasse 6 werden z.B. mittels Bohren, Fräsen, Pressen oder Stanzen oder in den Träger eingearbeitet, zudem wird in der Nähe der Peripherie 14 der Randbereich 21 zumindest teilweise verdichtet, was mittels Verpressen geschehen kann.

c) Der beidseitig, wie unter a) beschriebene, beschichtete Polymerelektrolyt 17 wird auf den unter b) beschriebenen Träger 2 so aufgelegt, dass er auf die Seite des Trägers 2 zu liegen kommt, welche keine Kanäle 4, 5 aufweist.

d) Eine kleine Trennplatte 20 wird so aufgelegt, dass sie im Wesentlichen den inneren, von der Sauerstoffkathode nicht abgedeckten Bereich des Elektrolyten überdeckt, ohne jedoch die Sauerstoffelektrode zu berühren.

e) Eine grosse Trennplatte 1 wird nun so unter den Träger 2 gelegt, dass die Kanäle 7 bis 9 auf die dem Träger zugewandten Seite zu liegen kommen. Diese Trennplatte ist z.B. als Blech ausgebildet und weist Wellen bzw. Rippen auf, so dass sie von innen nach aussen verlaufende Mittel zur gezielten Leitung von Gasen bildet. Die Trennplatte- kann aber auch aus massivem Material bestehen, in die - mittels spanabhebender Bearbeitung - Kanäle eingearbeitet sind.

f) In den gegenseitigen Berührungsbereichen nahe der Öffnung 3 werden die grosse und kleine Trennplatte so miteinander verbunden, dass sie gemeinsam Durchlasse 6 bilden. Eine Auswahl von alternativen Verbindungsmöglichkeiten ist in Fig. 5 dargestellt.

Fig. 5 zeigt ein Auswahl von alternativen Verbindungen zwischen der grossen 1 und kleinen 20 Trennplatte. Dabei handelt es sich in Fig. 5a um eine Verbindung mittels Verlöten oder Verkleben; oder - beim Einsatz des Polymer-Elektrolyten - durch eine unter Druck deformierte, weiche Dichtung aus elastischem Material (z.B. Silikonkautschuk). In Fig. 5b ist eine Schweissverbindung und in Fig. 5c eine Verbindung mittels einer Rohr- oder Hohlniete dargestellt. Fig. 5d zeigt eine Verbindung in der ein Teil der kleinen Trennplatte 20 als tiefgezogene Hohlniete ausgebildet ist; selbstverständlich könnte auch die grosse Trennplatte 1 in entsprechender Weise ausgebildet sein (nicht dargestellt). Insbesondere die unter Fig. 5a und 5b gezeigten Verbindungen eignen sich auch für Formen von Durchlassen 6, die von der Kreisform abweichen und beispielsweise oval, nierenförmig oder polygonal ausgebildet sind.

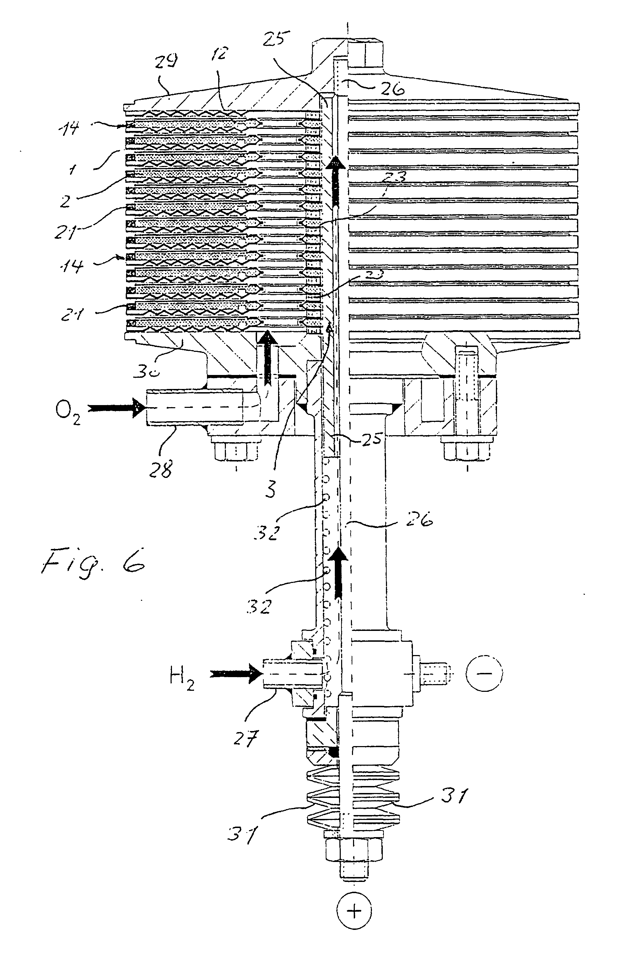

In Fig. 6 ist ein Längsschnitt/Aufriss durch eine Brennstoffzellenanordnung dargestellt. Die einzelnen, hier kreisscheibenförmigen Brennstoffzellen sind dabei entsprechend Fig. 2 gestapelt. Mit Bezugszahlen sind die grossen Trennplatten 1, die porösen bzw. gasdurchlässigen Träger 2, die zentrale Öffnung 3, die Front 12, der zumindest teilweise verdichtete Randbereich 21 und die Peripherie 14 der axial, konzentrisch geschichteten Brennstoffzellen versehen. Der gesamte Zellenstapel, insbesondere die Trennplatte 1 und der Träger 2 weisen eine durchgehende zentrale Öffnung 3 auf. Zur Gewährleistung der Brennstoffzufuhr ist eine elektrisch isolierende, vorzugsweise aus keramischem Material bestehende Zentrierhülse 25 vorgesehen, deren koaxiale Bohrung den Zuganker 26 aufnimmt. Koaxial zur Zentrierhülse 25 sind die ringförmigen Dichtungen 23 angeordnet. Auf der Sauerstoffseite kann auf zusätzliche Dichtungen verzichtet werden, die interne Zufuhr des Sauerstoffs zu den Brennstoffzellen ist vorzugsweise dichtungsfrei gewährleistet. Die externe Zuleitung für den Brennstoff (z.B. Methan beim Betrieb mit einem Feststoffelektrolyt oder z.B. Wasserstoff beim Betrieb mit einem Polymerelektrolyten) ist mit 27 und die externe Zuleitung für den Sauerstoffträger bzw. den Sauerstoff ist mit 28 bezeichnet. Die frei liegende Endplatte des Zellenstapels ist mit 29 bezeichnet. Der zentrale Zuganker 26, der den ganzen Stapel axial zusammenhält, wird zur Stromleitung herangezogen und besteht vorzugsweise aus korrosionsbeständigem Edelstahl. Eine Anfangsplatte 30 ist auf Masse gelegt und mit einem die Zentrierhülse umfassenden Schutzrohr elektrisch direkt kontaktiert, so dass der Zuganker 26 und das Schutzrohr als Pole zum Abgreifen des Nutzstroms ausbildbar sind. Der Zuganker 26 ist mittels Tellerfedern 31 vorgespannt. Ausserdem wird die Zentrierhülse 25 mittels einer Schraubenfeder 32 stets in der gewünschten Position gehalten. Es kann vorgesehen sein, dass der mindestens eine Zuganker einen auch bei hohen Temperaturen elektrisch gut leitenden Kern, aus z.B. Kupfer besitzt, der von einem Mantel aus korrosionsbeständigem, hochwarmfesten Material umschlossen ist. Es können auch mehrere Zuganker vorgesehen sein. Die grosse Trennplatte 1 einer Brennstoffzelle ist dabei mit derjenigen Elektrode ihrer Nachbarzelle elektrisch kontaktiert, welche sich auf der vom Träger 1 abgewandten Seite des Elektrolyten 17 befindet.

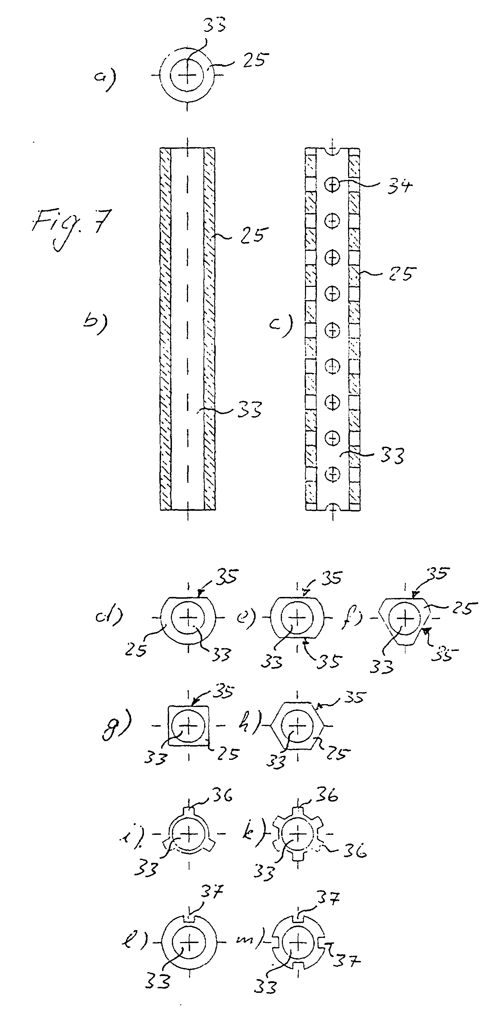

Fig. 7 zeigt Schnittdarstellungen von alternativen Zentrierhülsen 25, welche aus einem elektrisch isolierenden Material z.B. aus Keramik hergestellt sein können. Im Querschnitt eine einfache Kreisringform (Fig. 7a) aufweisen kann die Zentrierhülse 25, wenn diese z.B. aus einem porösen, gasdurchlässigen Material hergestellt ist. Dann kann das erste Gas, oder Brenngas im zentralen Hohlraum 33 der Zentrierhülse bzw. im Raum zwischen dem Zuganker 26 und der Innenwand der Zentrierhülse 25 axial zum Brennstoffzellenstapel bzw. zu der Brennstoffzellenanordnung verteilt werden. Durch die gasdurchlässige Wand der Zentrierhüise 25, welche die Öffnung 3 mit ihrem äusseren Umfang im Wesentlichen ausfüllt, kann dann das Brenngas zu den einzelnen Eintrittsöffnungen 11 der individuellen Brennstoffzellen gelangen. Die Querschnittsform kann bzw. muss komplizierter gewählt werden, wenn die Zentrierhülse 25 aus einem nicht gasdurchlässigen Material besteht (Fig. 7c bis 7m). Zudem ist dann die Ausbildung von Löchern 34 von Vorteil, damit eine möglichst gleichmässige Versorgung der Eintrittsöffnungen 11 mit Brenngas erfolgen kann. Auch kann die Zentrierhülse aus vielen, vorteilhafterweise und im Wesentlichen ringförmigen, Einzelteilen bestehen, die axial aufeinander geschichtet und gegenseitig verzahnt ausgebildet sein können. Um den Druckausgleich und damit die gleichmässige Versorgung der Eintrittsöffnungen 11 mit Brenngas in axialer Richtung zu gewährleisten, kann die Zentrierhülse 25 an ihrem Umfang wie folgt verändert sein:

Es können einzelne (Fig. 7d), zwei (Fig. 7e), drei (Fig. 7f), vier (Fig. 7g), fünf (nicht gezeigt), sechs (Fig. 7h) oder mehr Seiten 35 abgeflacht werden, so dass ein Polygon mit zentralem Hohlraum 33 entsteht. Die Aussenkanten dieser Polygone liegen dabei immer auf dem äussersten Umfang der Zentrierhülse 25, damit diese ihre Zentrierfunktion beibehält. Auch können, beim Abtragen vom Umfang der Zentrierhülse, eine Vielzahl (z.B. Fig. 7k), jedoch mindestens drei Stege 36 (Fig. 7i) stehengelassen werden. Alternativ oder in Kombination dazu können auch einzelne (Fig. 7l) oder eine Vielzahl (z.B. Fig. 7m) von Nuten 37 eingearbeitet werden. Symmetrisch ausgebildete Zentrierhülsen (vergl. Fig. 7a, 7e bis 7k und 7m) haben sich, wegen der gleichmässigeren Ausdehnung in Folge der Erwärmung der Brennstoffzellenanordnung, besonders bewährt.

In einer Versuchsanlage wurde als poröse Trägerschicht 2 ein 2 mm dicker Nickelfilz verwendet, der an der Oberfläche mit Nickelpulver so verdichtet war, dass die drei aktiven Schichten 17, 18, 19 im Vakuum durch Plasmaspritzen aufgetragen werden konnten. Der äussere Durchmesser dieser elektrolytisch aktiven Schichten betrug 114 mm, der innere 64 mm. Die aktive Fläche betrug also etwa 70 cm$^2$. Beim Betrieb einer einzelnen Zelle wurde bei einer Betriebstemperatur von 860°C eine Leistung von etwa 17 Watt erzielt. Ein aus 20 solchen Zellen aufgebauter Stapel stellte in der beschriebenen Brennstoffzellenanordnung bei einer vergleichbaren Betriebstemperatur etwa 340 Watt elektrische Leistung bei 12 Volt Betriebsspannung bereit.

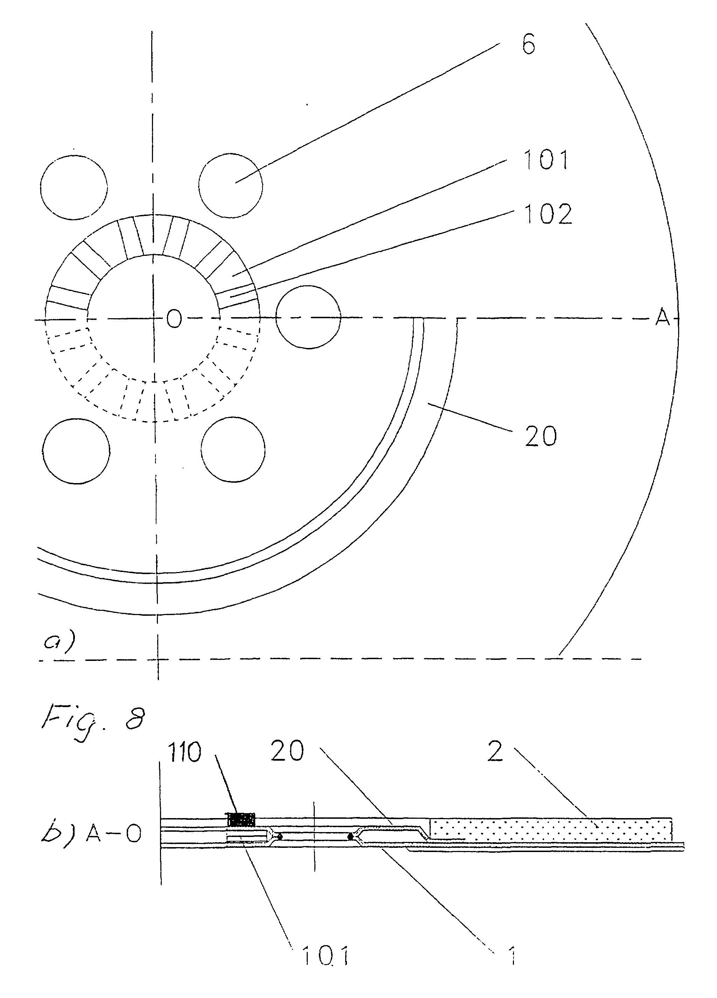

In den Figuren 8 bis 13 werden weitere bevorzugte Ausführungsformen der erfindungsgemässen Brennstoffzelle dargestellt, welche als gemeinsames Hauptmerkmal ein gegenüber dem gasdurchlässigen Träger 2 abgesetztes Mittelteil 100 aufweisen, wobei die kleine Trennplatte 20 auf der ersten Oberfläche und die grosse Trennplatte 1 auf der zweiten Oberfläche dieses Mittelteils 100 liegt. Somit wird das beispielsweise poröse Material des Trägers 2 vorzugsweise im aktiven, ringförmigen äusseren Bereich der Brennstoffzelle eingesetzt. Der innere Bereich, das Mittelteil 100 ist jedoch, den Anforderungen bezüglich einer hohen Widerstandsfähigkeit gegenüber dem Druck des Zugankers entsprechend, vorzugsweise aus soliden Werkstoffen aufgebaut. Beide Bereiche werden entlang einer kreisförmigen Trennlinie durch Löten, Schweissen oder Sintern miteinander verbunden. Auch kann der innere und der äussere Bereich bei der Montage an der dazwischenliegenden Trennfläche mit Dichtmitteln versehen und dann zusammengesteckt werden. Jeweils zwischen zwei Nachbarzellen und im Wesentlichen konzentrisch zur Öffnung 3 ist in einer Brennstoffzellanordnung bzw. in einem Brennstoffzellstapel vorzugsweise eine Dichtung 110 angeordnet, welcher ein Vermischen des ersten (Wasserstoff) und zweiten (Luftsauerstoff) Gases verhindert. Der für den Einsatz bei Brennstoffzellen bevorzugte Aufbau wird nun anhand der beispielhaften und nicht als Einschränkung zu verstehenden Ausführungsformen 2 bis 7 beschrieben:

Ausführungsform 2:

Wie aus Fig. 8 ersichtlich, wird das Brenngas H$_2$ von der Öffnung 3 zwischen der grossen Trennplatte 1 und der kleinen Trennplatte 20 hindurch zur gasdurchlässigen oder porösen Schicht des Trägers 2 geleitet. Der H$_2$-Strom wird am Rand des Mittelteils 100, welcher hier die Front 12 bildet, gegen den Bereich der grossen Trennplatte 1 geleitet, wo die Zuströmkanäle 7 beginnen. Über diese wird dann das Brenngas effektiv und gleichmässig auf den aktiven, ringförmigen äusseren Bereich der Brennstoffzelle verteilt. Zur Aufnahme des zur zuverlässigen Abdichtung zwischen zwei benachbarten Brennstoffzellen notwendigen Anpressdrucks ist um die zentrale Öffnung 3 herum und zwischen der kleinen und der grossen Trennplatte ein gasdurchlässiger Stützring 101 angeordnet. Dieser Stützring 101 kann aus porösem Sintermaterial bestehen; er kann aber auch aus massivem Metall gefertigt sein, in das zur Strömungsführung radiale Nuten 102 eingearbeitet sind. Im dem Bereich, wo sich die beiden Trennplatten berühren und die axialen Durchlasse 6 für den Luftsauerstoff vorgesehen sind, werden die beiden Trennplatten gasdicht miteinander verlötet, verschweisst oder vernietet. Auch an ihrem äusseren Umfang ist die kleine Trennplatte 20 mit der grossen Trennplatte 1 mechanisch verbunden, dies aber vorzugsweise so, dass das Brenngas im Wesentlichen gleichmässig in die Zuströmkanäle 7 eintreten kann. Die gasdurchlässige oder poröse Trägerschicht 2 wird auf diesen Plattenverbund 1, 20, 101 aufgebracht und vorzugsweise mit diesem verlötet.

Ausführungsform 3:

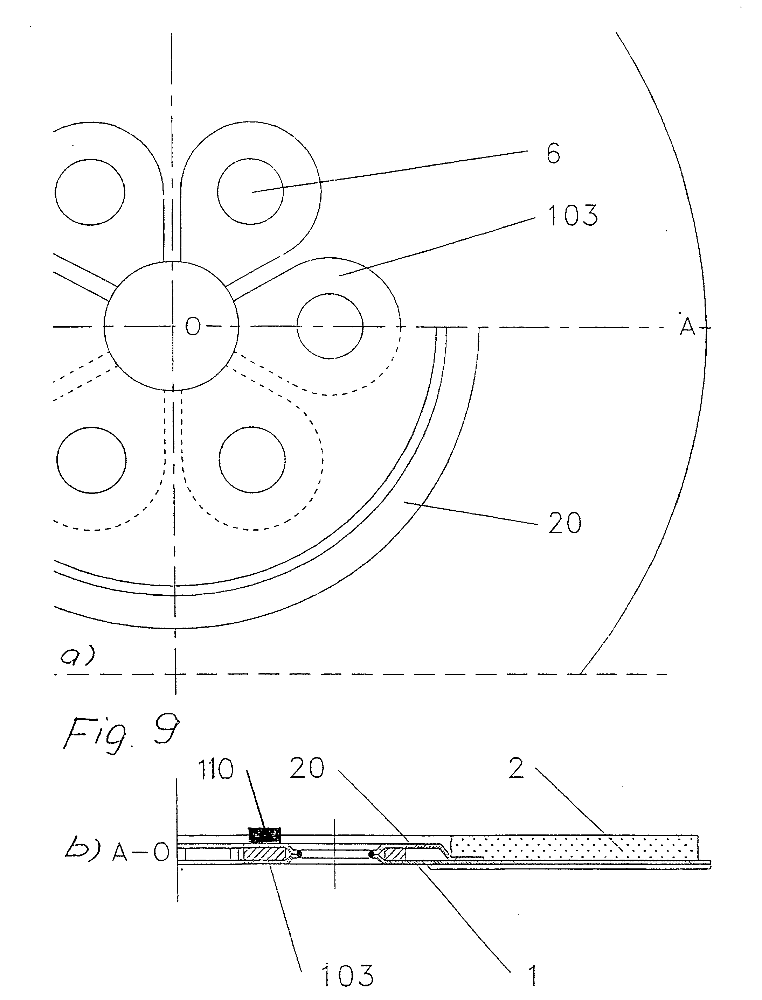

Wie aus Fig. 9 ersichtlich, wird an der Stelle des Stützrings 101 für jeden Durchlass 6 ein Blechteil 103 eingesetzt, das mit beiden Trennplatten 1, 20 flächig verlötet oder verschweisst wird. Dadurch entsteht jeweils zwischen zwei Durchlassen 6 ein radialer Kanal 4 für die Zuführung des Brenngases $H_2$ von der Öffnung 3 zum kreisförmigen Kanal 5. Die nach innen gerichteten Lappen dieser Blechteile dienen der Abstützung der Trennplatten 1, 20 im druckbelasteten Dichtbereich. Die gasdurchlässige Trägerschicht 2 wird wie in der 2 Ausführungsform beschrieben mit dem Plattenverbund 1, 20, 103 vereint.

Ausführungsform 4:

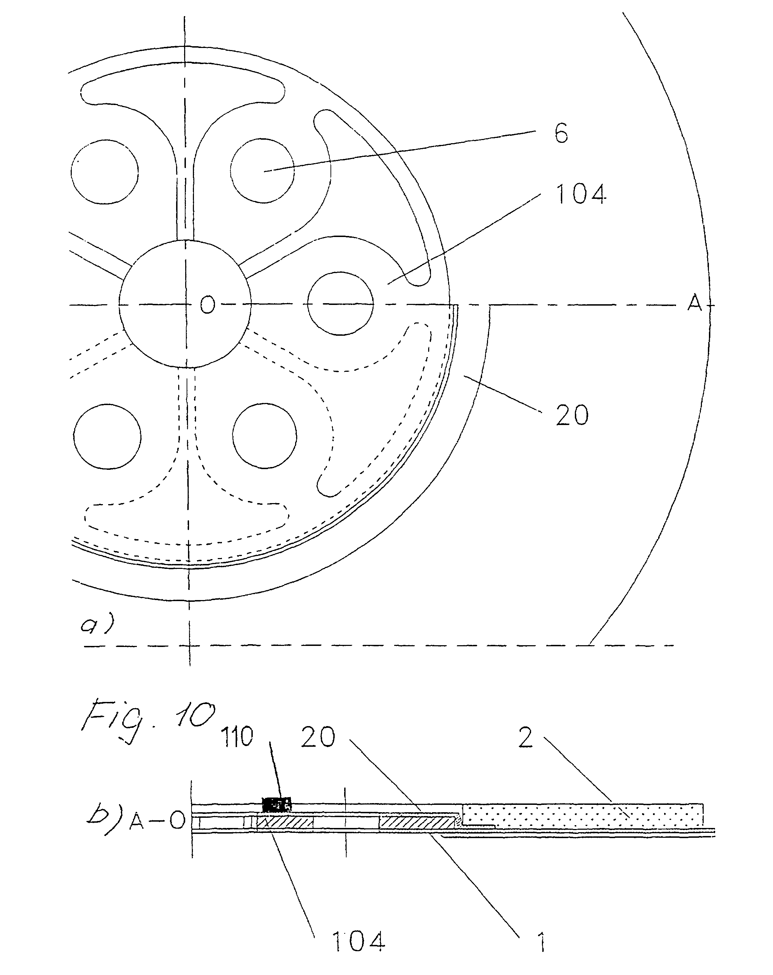

Wie aus Fig. 10 ersichtlich, sind hier die Blechteile 103 zu einem einzigen Bauteil 104 vereint: Jedes der gelochten, den Blechteilen 103 entsprechenden Elemente, ist aussen über eine stielförmige Verlängerung mit einem Verbindungsnng verbunden, der aus allen Blechteilen 103 eine konstruktive Einheit 104 macht und die Front 12 bildet. Es sind somit Zwischenräume vorgesehen, über die das Brenngas $H_2$ zu den in die grosse Trennplatte 1 eingearbeiteten Zuströmkanälen 7 gelangen kann. Die gasdurchlässige Trägerschicht 2 wird wie in der 2 Ausführungsform beschrieben mit dem Plattenverbund 1, 20, 104 vereint.

Ausführungsform 5:

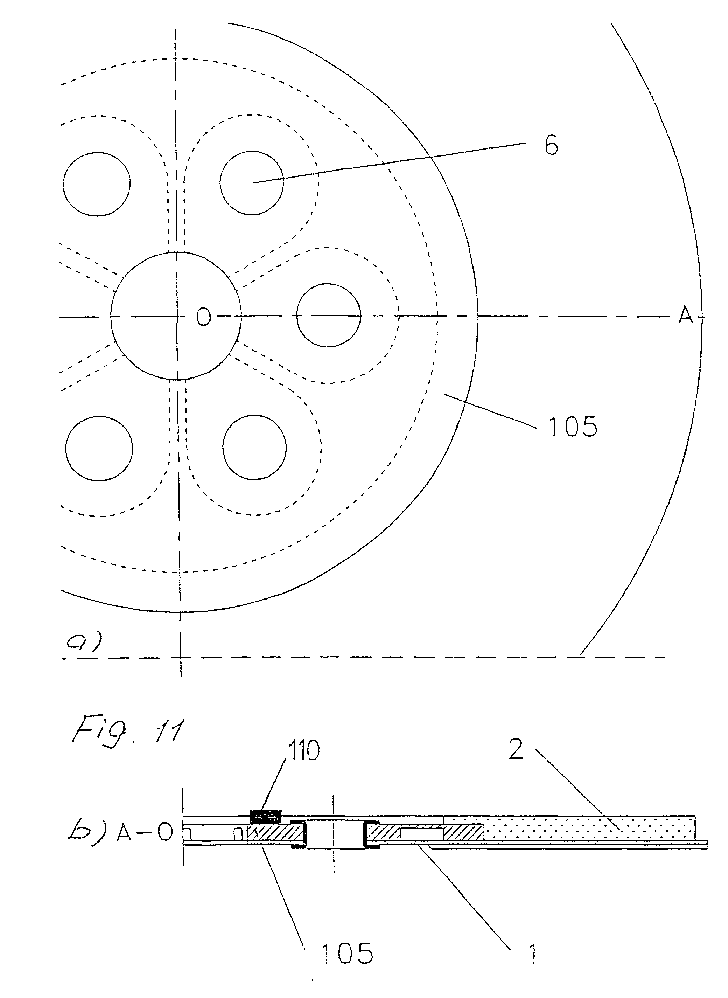

Wie in Fig. 11 abgebildet, wird hier im Mittelteil 100 des Trägers 2 das Bauteil 104 mit den Kanalstrukturen 4, 5 und die kleine Trennplatte 20 in einem einzigen Schmiede- oder Pressteil 105 vereint. Für die Montage einer Brennstoffzelle, entsprechend dieser fünften Ausführungsform, eignen sich zwei Wege:

a) Das Pressteil 105 wird mit der porösen Trägerschicht 2 verlötet, worauf diese Kombination 2, 105 mit der grossen Trennplatte 1 mittels Rohrnieten im Bereich der Durchlasse 6 verbunden wird.
b) Die Vernietung von Pressteil 105 und grosser Trägerplatte 1 wird zuerst ausgeführt. Die fertig mit dem Elektrolyt 17 beschichtete, ringförmige und poröse Trägerschicht 2 wird - vorzugsweise unter Zugabe von Dichtungsmitteln - während der Montage eines Brennstoffzellstapels eingelegt.

Der hier beschriebene Aufbau erlaubt den Einsatz von sehr dünnem, anschmiegsamem, korrosionsbeständigem Blech für die grosse Trennplatte 1.

Ausführungsform 6:

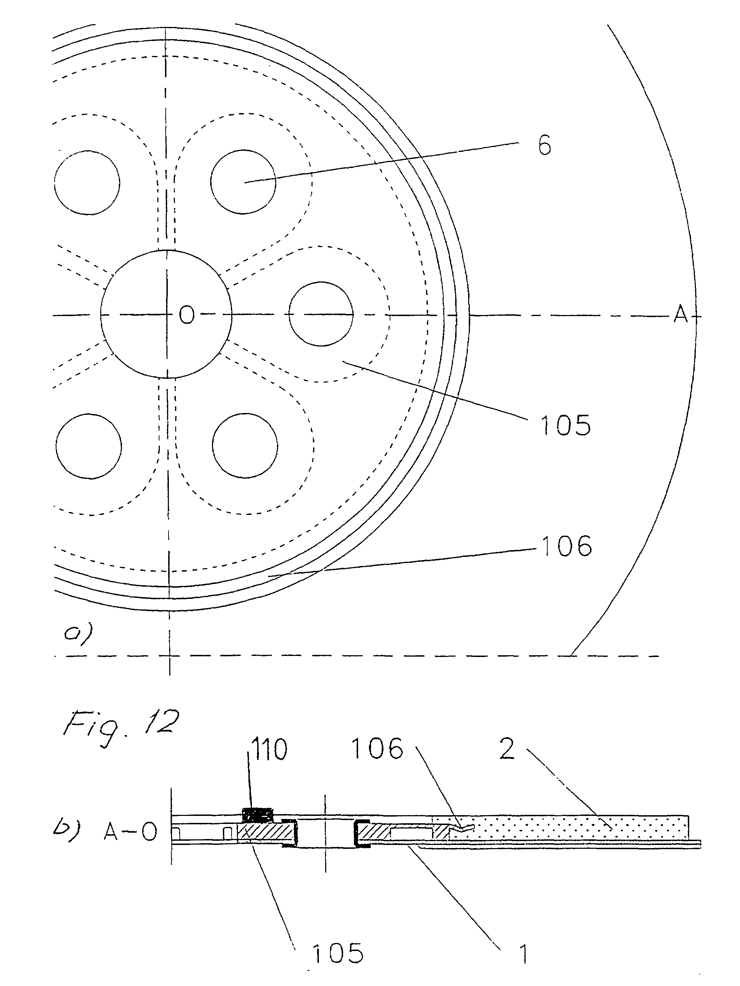

Wie in Fig. 12 abgebildet, wird hier im Mittelteil 100 des Trägers 2 das Bauteil 104 mit den Kanalstrukturen 4, 5 und die kleine Trennplatte 20 ebenfalls in einem einzigen Schmiede- oder Pressteil 105 vereint. Zusätzlich weist dieses Pressteil 105 an ihrem äusseren Rand eine dünne Lamelle 106 auf. Um diese Lamelle herum wird das Metallpulver für die hier aus gesintertem Metall herzustellende poröse Trägerschicht 2 gepresst. So wird das Schmiedeteil 105 in einem Arbeitsgang mit der gasdurchlässigen Trägerschicht 2 mechanisch verbunden. Bei der Endmontage wird die Verbundscheibe 2, 105 mit der grossen Trennplatte 1 vorzugsweise mittels Rohrnieten im Bereich der Durchlasse 6 verbunden.

Ausführungsform 7:

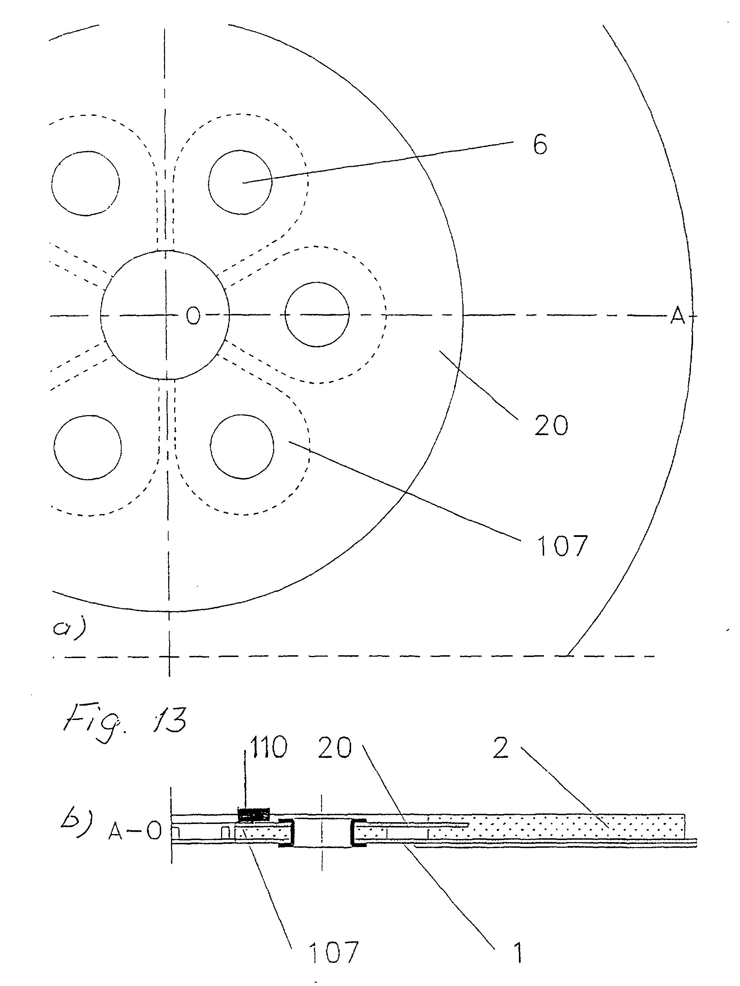

Wie in Fig. 13 abgebildet, wird hier im Mittelteil 100 des gasdurchlässigen Trägers 2 die kleine, aus Blech gefertigte Trennplatte 20 in die poröse Trägerschicht 2 eingesintert. Im gleichen Arbeitsgang des Sinterns des Metallpulvers für die Trägerschicht 2 werden die strömungsführenden Kanäle 4, 5 auf der unteren Seite der kleinen Trennplatte 20 im Metalipulver 107 ausgespart, welches im Mittelbereich 100 ebenfalls an die kleine Trennplatte 20 gesintert wird. Die gesamte Verbundscheibe 2, 20, 107 wird somit in einem Arbeitsgang hergestellt. Nach dem Aufbringen der elektrochemischen Schicht, wie auch in der sechsten Ausführungsform, wird die Verbundscheibe 2, 20, 107 mittels Rohrnieten im Bereich der Durchlasse 6 mit der grossen Trennscheibe 1 verbunden.

Die neuartige Brennstoffzellenanordnung ist im Vergleich zu bekannten Anordnungen sehr einfach, robust, leicht und kostengünstig zu fertigen. Beispielhafte Anwendungen erfindungsgemässer Brennstoffzellenanordnungen umfassen:

- Tragbare Stromerzeuger für die Gleichstromversorgung von Fahrzeugen, Booten, Flugzeugen, Baustellen, Berghütten.

- Kleine Anlagen zur gleichzeitigen Strom- und Wärmeerzeugung.

- Antrieb von Automobilen, wobei bei entsprechender Vorbehandlung sogar flüssige Brennstoffe wie Methanol, bleifreies Benzin oder Dieselkraftstoff eingesetzt werden könnten.

Vorteile der Erfindung umfassen:

- Für all diese Anwendungen ist thermische Trägheit unerwünscht. Die hier beschriebene Brennstoffzellenanordnung kann wegen ihres geringen Gewichts jedoch sehr schnell auf die gewünschte Betriebstemperatur gebracht und dann regelflink betrieben werden.

- Durch einen neuartigen Aufbau der Einzelzellen aus nur drei Bauteilen (grosse 1 und kleine 20 Trennplatte, sowie poröser Träger 2 mit aktiver Schicht) wird eine extreme Vereinfachung der Geometrie ermöglicht, was zu einer kostengünstigen Massenfertigung, zur Robustheit des Einzelelements führt.

- Der einfache Aufbau ermöglicht das Verwenden einer einzigen, käuflichen Dichtung aus verdichteten Keramikfasern oder Glimmer im heissen Bereich.

- Die Anordnung eines einzigen Zugankers 26 in der reduzierenden Umgebung der Brennstoffzuführung bewirkt eine Vermeidung von Oxidation bei elektrischen Kontakten und ermöglicht - in Kombination mit einer Zentrierhülse 25 - eine freie Zirkulation des Brennstoffes im Innenbereich des Stapels.

- Die Ausbildung des Zugankers 26 als stromführendes Element erlaubt eine verlustarme Stromleitung von der freiliegenden Endplatte 29 nach aussen.

- Eine Verbindung der festen Anfangsplatte 30 mit dem Gehäuse stellt den Massekontakt her und macht eine zweite elektrische Durchführung überflüssig.

- Die wellen-, nuten oder noppenförmige Ausbildung, insbesondere die Ausbildung der gekrümmten Wellen als Evolventen mit gleichen Abständen zwischen zwei benachbarten Wellen ermöglichen - unabhängig vom jeweiligen Radius der grossen Trennplatte 1 - einen kontrollierten Durchfluss des Brennstoffes und des Oxidationsmittels. Durch eine solcherart optimierte Gasführung werden elektrische Verluste minimiert.

- Der vorzugsweise zentralsymmetrische Aufbau gewährleistet unter Vermeidung örtlicher Spannungsanhäufungen eine optimale Stabilität der Brennstoffzellenanordnung. Dabei können die einzelnen Brennstoffzellen so gebaut sein, dass ihr - jeweils durch die grosse Trennpiatte 1 gegebener - Drehsinn in allen Brennstoffzellen gleich oder im Stapel abwechselnd links- bzw. rechtsdrehend ausgerichtet ist.

**Patentansprüche**

1. Scheibenförmige Brennstoffzelle zur axialen Schichtung in einem Stapel, der durch einen Zuganker fixiert ist, wobei die Brennstoffzelle zur Aufnahme des Zugankers und zum Einlass eines ersten Gases eine Öffnung (3) aufweist, **dadurch gekennzeichnet, dass** die Brennstoffzelle umfasst:

- einen ionenleitenden Elektrolyten (17) in der Form eines Hochtemperatur-Keramik-Elektrolyten oder eines Niedertemperatur-Polymer-Elektrolyten;

- eine poröse Kathodenschicht (18) als Sauerstoffelektrode bzw. eine poröse Anodenschicht (19) als Brennstoffelektrode auf je einer Seite des Elektrolyten (17);

- einen gasdurchlässigen Träger (2) mit einer ersten und zweiten Oberfläche und Kanälen zur Leitung von Gasen;

- eine kleine Trennplatte (20), die zumindest teilweise auf der ersten Oberfläche des Trägers (2) liegt und im Wesentlichen den inneren, von der Kathode (18) nicht abgedeckten Bereich des Elektrolyten (17) überdeckt;

- eine grosse, elektrisch leitende Trennplatte (1), die auf der zweiten Oberfläche des Trägers (2) liegt und Kanäle zur gezielten Leitung von Gasen umfasst, welche mit den Kanälen im Träger (2) zusammenwirken.

2. Brennstoffzelle nach Anspruch 1, **dadurch gekennzeichnet, dass** der Elektrolyt (17) auf der ersten Oberfläche des Trägers (2) angeordnet ist und der Träger (2) an seiner Peripherie (14) wenigstens teilweise verdichtet ist und die ansonsten voneinander beabstandeten Trennplatten (1, 20) so geformt sind, dass sie nahe der Öffnung (3) zumindest einen gegenseitigen Berührungsbereich (22) und in diesem Berührungsbereich (22) zumindest einen Durchlass (6), zur Leitung eines zweiten Gases in axialer Richtung, aufweisen.

3. Brennstoffzelle nach einem der Ansprüche 1 oder 2, **dadurch gekennzeichnet, dass** der Träger (2) Kanäle (4, 5) aufweist, welche das erste, in der Öffnung (3) zugeführte Gas auf einer Front (12) verteilen.

4. Brennstoffzelle nach einem der Ansprüche 1 bis 3, **dadurch gekennzeichnet, dass** ein Mittelteil (100) des Trägers (2) in der Höhe abgesetzt ist und die kleine Trennplatte (20) auf der ersten Oberfläche und die grosse Trennplatte (1) auf der zweiten Oberfläche dieses Mittelteils (100) liegt.

5. Brennstoffzelle nach einem der Ansprüche 1 sowie 3 oder 4 (sofern er sich nicht auf Anspruch 2 bezieht), **dadurch gekennzeichnet, dass** der Elektrolyt (17) auf der ersten Oberfläche des Trägers (2) angeordnet ist und der Träger (2) an seiner Peripherie (14) wenigstens teilweise verdichtet ist, wobei die kleine Trennplatte (20) und der Mittelteil (100) aus einem Stück gefertigt sind, welches Gasleitungskanäle (4, 5) und zumindest einen Durchlass (6), zur Leitung eines zweiten Gases in axialer Richtung aufweist.

6. Brennstoffzelle nach einem der vorhergehenden Ansprüche, **dadurch gekennzeichnet, dass** die grosse Trennplatte (1) auf der dem Träger (2) zugewandten Seite eine Vielzahl von Kanälen zur gezielten Leitung dieses ersten Gases in der Form von Zuströmkanälen (7) aufweist, welche im Bereich einer Front (12) stumpf beginnen und über welche das erste Gas an dieser Front übernommen und gezielt in Richtung der Peripherie (14) der Brennstoffzelle leitbar ist.

7. Brennstoffzelle nach Anspruch 6, **dadurch gekennzeichnet, dass** die Zuströmkanäle (7) in der grossen Trennplatte (1) an der Aussenseite einer Diffusionszone (13) stumpf enden.

8. Brennstoffzelle nach einem der Ansprüche 3 bis 7, **dadurch gekennzeichnet, dass** die grosse Trennplatte (1) zudem eine Vielzahl von Kanälen zur gezielten Leitung des ersten Gases in der Form von Abströmkanälen (9) aufweist, welche an der Innenseite der Diffusionszone (13) stumpf beginnen, die Zuströmkanäle (7) nicht berühren und an der Peripherie (14) der Brennstoffzelle offen enden.

9. Brennstoffzelle nach einem der Ansprüche 3 bis 8, **dadurch gekennzeichnet, dass** die grosse Trennplatte (1) zudem eine Vielzahl von Kanälen in der Form von Druckausgleichskanälen (8) aufweist, welche zwischen den Zu- (7) und Abströmkanälen (9) angeordnet sind und diese nicht berühren und welche an der Innenseite der Diffusionszone (13) stumpf beginnen und an der Aussenseite der Diffusionszone (13) stumpf enden.

10. Brennstoffzelle nach einem der Ansprüche 1 bis 9, **dadurch gekennzeichnet, dass** die grosse Trennplatte (1) auf der dem Träger (2) abgewandten Seite eine Vielzahl von Kanälen zur gezielten Leitung dieses zweiten Gases in der Form von Durchgangskanälen (15) aufweist.

11. Brennstoffzelle einem der Ansprüche 1 bis 10, **dadurch gekennzeichnet, dass** die Kanäle (7, 8, 9, 15) zur gezielten Leitung von Gasen jeweils entlang von stetigen Linien verlaufen, welche unverzweigt und sowohl von der radialen als auch von der tangentialen Richtung abweichend sind.

12. Brennstoffzelle nach einem der Ansprüche 1 bis 10, **dadurch gekennzeichnet, dass** die Kanäle (7, 8, 9, 15) zur gezielten Leitung von Gasen jeweils entlang von Linien verlaufen, die durch die Formel

$$[1] \qquad \varphi = \pm\, A\, \{[(r/r_0)^2 -1]^{0.5} - B\, \arctan\, [(r/r_0)^2 -1]\}$$

beschrieben werden, wobei gilt: **A > 0** und **B > 0,** so dass sich innerhalb einer Brennstoffzelle ein Drehsinn der Gesamtheit der Linien ergibt, wobei:

$\varphi$ = Winkel von einer durch den Ursprung führenden Bezugslinie aus gemessen;

$r$ = vom Ursprung gemessener, variabler Radius;

$r_0$ = von Ursprung gemessener Bezugsradius bedeuten.

13. Brennstoffzelle nach Anspruch 12, **dadurch gekennzeichnet, dass** in der Formel [1] gilt: **0 < A < 2** und **0 < B < 2.**

14. Brennstoffzelle nach Anspruch 12, **dadurch gekennzeichnet, dass** in der Formel [1] gilt: **A = 1** und **B = 1.**

15. Brennstoffzelle nach einem der Ansprüche 12 bis 14, **dadurch gekennzeichnet, dass** die Kanäle (7, 8, 9, 15) zur gezielten Leitung von Gasen entlang von stetigen und/oder unstetigen Linien verlaufen, welche die Kurve, die durch die Formel [1] beschrieben wird, approximieren.

16. Anordnung von Brennstoffzellen nach einem der Ansprüche 1 bis 4 und/oder 6 bis 15, **dadurch gekennzeichnet, dass** die Brennstoffzellen axial geschichtet sind in einem Stapel, der durch mindestens einen - zwischen einer Anfangs- (30) und einer Endplatte (29) wirkenden - Zuganker (26) fixiert ist, wobei jeder Zuganker (26) von zumindest einer elektrisch isolierenden Zentrierhülse (25) so umgeben ist, dass ein Raum (33) zwischen dem Zuganker (26) und der Hülse (25), sowie ein Raum zwischen der Hülse (25) und dem Rand eines - durch die Öffnungen (3) des Stapels von Brennstoffzellen gebildeten - Kanals für das erste Gas durchströmbar ist und dass der Raum, der durch die in einem Register übereinander platzierten Durchlasse (6) in den gegenseitigen Berührungsbereichen (22) der Trennplatten (1, 20) entsteht, für das zweite Gas durchströmbar ist.

17. Anordnung von Brennstoffzellen nach Anspruch 5, **dadurch gekennzeichnet, dass** die Brennstoffzellen axial geschichtet sind in einem Stapel, der durch mindestens einen - zwischen einer Anfangs- (30) und einer Endplatte (29) wirkenden - Zuganker (26) fixiert ist, wobei jeder Zuganker (26) von zumindest einer elektrisch isolierenden Zentrierhülse (25) so umgeben ist, dass ein Raum (33) zwischen dem Zuganker (26) und der Hülse (25), sowie ein Raum zwischen der Hülse (25) und dem Rand eines - durch die Öffnungen (3) des Stapels von Brennstoffzellen gebildeten - Kanals für das erste Gas durchströmbar ist und dass der Raum, der durch die in einem Register übereinander platzierten Durchlasse (6) im Mittelteil (100) des Trägers (2) entsteht, für das zweite Gas durchströmbar ist.

18. Anordnung nach Anspruch 16 oder 17, **dadurch gekennzeichnet, dass** die Brennstoffzellen so gestapelt sind, dass der Drehsinn der Gesamtheit der gasleitenden Kanäle (7, 8, 9, 15) einer Brennstoffzelle dem Drehsinn zumindest einer der Nachbarzellen entgegensteht.

19. Anordnung nach Anspruch 18, **dadurch gekennzeichnet, dass** jeweils zwischen zwei Nachbarzellen und im Wesentlichen konzentrisch zur Öffnung (3) eine Dichtung (110) angeordnet ist, der ein Vermischen des ersten und zweiten Gases verhindert.

20. Anordnung nach einem der Ansprüche 16 bis 19, **dadurch gekennzeichnet, dass** die grosse Trennplatte (1) einer Brennstoffzelle mit derjenigen Elektrode ihrer Nachbarzelle elektrisch kontaktiert ist, welche sich auf der vom Träger (1) abgewandten Seite des Elektrolyten (17) befindet.

21. Anordnung nach Anspruch 20, **dadurch gekennzeichnet, dass** die Endplatte (29) mit dem mindestens einen Zuganker (26) elektrisch verbunden ist und den Strom abführt und dass die Anfangsplatte (30) auf Masse gelegt und mit einem die Zentrierhülse umfassenden Schutzrohr elektrisch direkt kontaktiert ist, so dass der Zuganker (26) und das Schutzrohr als Pole zum Abgreifen des Nutzstroms ausbildbar sind.

22. Anordnung nach einem der Ansprüche 16 bis 21, **dadurch gekennzeichnet, dass** der mindestens eine Zuganker einen auch bei hohen Temperaturen elektrisch gut leitenden Kern besitzt, der von einem Mantel aus korrosionsbeständigem, hochwarmfesten Material umschlossen ist.

**Claims**

1. Fuel cell in the form of a disc for axial layering in a stack which is fixed by a tie rod, wherein the fuel cell has an opening (3) to hold the tie rod and to form an inlet for a first gas, **characterized in that** the fuel cell comprises:

   • an ion-conducting electrolyte (17) in the form of a high-temperature ceramic electrolyte or a low-temperature polymer electrolyte;
   • a porous cathode layer (18) as an oxygen electrode or a porous anode layer (19) as a fuel electrode on each side of the electrolyte (17);
   • a gas-permeable substrate (2) having a first and a second surface and having channels for carrying gases;
   • a small separating plate (20) which is located at least partially on the first surface of the substrate (2) and essentially covers the inner region of the electrolyte (17) which is not covered by the cathode (18);
   • a large, electrically conductive separating plate (1) which is located on the second surface of the substrate (2) and comprises channels for carrying gases in a controlled manner, which gases interact with the channels in the substrate (2).

2. Fuel cell according to Claim 1, **characterized in that** the electrolyte (17) is arranged on the first surface of the substrate (2), and the substrate (2) is at least partially compressed on its periphery (14) and the separating plates (1, 20) (which are otherwise at a distance from one another) are formed such that, close to the opening (3), they have at least one mutual contact region (22) and, in this contact region (22), have at least one aperture (6) for passing a second gas in the axial direction.

3. Fuel cell according to one of Claims 1 or 2, **characterized in that** the substrate (2) has channels (4, 5) which distribute the first gas, supplied in the opening (3), over a front (12).

4. Fuel cell according to one of Claims 1 to 3, **characterized in that** a centre part (100) of the substrate (2) is offset in height, and the small separating plate (20) is located on the first surface of this centre part (100), and the large separating plate (1) is located on its second surface.

5. Fuel cell according to one of Claims 1 as well as 3 or 4 (to the extent that it does not relate to Claim 2), **characterized in that** the electrolyte (17) is arranged on the first surface of the substrate (2), and the substrate (2) is at least partially compressed on its periphery (14), wherein the small separating plate (20) and the centre part (100) are manufactured from one piece, which has gas line channels (4, 5) and at least one aperture (6) in order to carry a second gas in the axial direction.

6. Fuel cell according to one of the preceding claims, **characterized in that** the large separating plate (1) has, on the side facing the substrate (2), a multiplicity of channels for carrying this first gas in a controlled manner in the form of inlet-flow channels (7) which start abruptly in the region of a front (12) and via which the first gas is transferred to this front and can be passed in a controlled manner in the direction of the periphery (14) of the fuel cell.

7. Fuel cell according to Claim 6, **characterized in that** the inlet-flow channels (7) in the large separating plate (1) end abruptly on the outside of a diffusion zone (13).

8. Fuel cell according to one of Claims 3 to 7, **characterized in that** the large separating plate (1) also has a multiplicity of channels for carrying the first gas in a controlled manner in the form of outlet-flow channels (9), which start abruptly on the inside of the diffusion zone (13), do not touch the inlet-flow channels (7) and end open at the periphery (14) of the fuel cell.

9. Fuel cell according to one of Claims 3 to 8, **characterized in that** the large separating plate (1) also has a multiplicity of channels in the form of pressure-equalizing channels (8), which are arranged between the inlet-flow (7) and outlet-flow (9) channels and do not touch them, and which start abruptly at the inside of the diffusion zone (13) and end abruptly at the outside of the diffusion zone (13).

10. Fuel cell according to one of Claims 1 to 9, **characterized in that**, on the side facing away from the substrate (2), the large separating plate (1) has a multiplicity of channels for carrying this second gas in a controlled manner, in the form of through-channels (15).

11. Fuel cell according to one of Claims 1 to 10, **characterized in that** the means (7, 8, 9, 15) for carrying gases in a controlled manner each run along continuous lines which have no branches and do not run either in the radial direction or in the tangential direction.

12. Fuel cell according to one of Claims 1 to 10, **characterized in that** the means (7, 8, 9, 15) for carrying gases in a controlled manner each run along lines which are described by the formula

$$[1] \qquad \varphi = \pm A\{[(r/r_0)^2-1]^{0.5} - B \text{ arctan } [(r/r_0)^2-1]\}$$

where A > 0 and B > 0, so that this results in all the lines running in one rotation direction within a fuel cell; wherein

$\varphi$ = angle measured from a reference line passing through the origin
r = variable radius, measured from the origin
$r_0$ = reference radius, measured from the origin.

13. Fuel cell according to Claim 12, **characterized in that**, in the formula [1], 0 < A < 2 and 0 < B < 2.

14. Fuel cell according to Claim 12, **characterized in that**, in the formula [1], A = 1 and B = 1.

15. Fuel cell according to one of Claims 12 to 14, **characterized in that** the channels (7, 8, 9, 15) for carrying gases in a controlled manner run along continuous and/or non-continuous lines, which approximate the curve which is described by the formula [1].

16. Arrangement of fuel-cells according to one of Claims 1 to 4 and/or 6 to 15, **characterized in that** the fuel cells are layered axially in a stack, which is fixed by at least one tie rod (26) - which acts between an initial plate (30) and an end plate (29) - wherein each tie rod (26) is surrounded by at least one electrically insulating centring sleeve (25), such that the first gas can flow through a space (33) between the tie rod (26) and the sleeve (25), as well as a space between the sleeve (25) and the edge of a channel - which is formed by the openings (3) in the stack of fuel cells, and **in that** the second gas can flow through the space which is formed by the apertures (6), placed one above the other in a grid, in the opposite contact regions (22) of the separating plates (1, 20).

17. Arrangement of fuel cells according to Claim 5, **characterized in that** the fuel cells are layered axially in a stack, which is fixed by at least one tie rod (26) - which acts between an initial plate (30) and an end plate (29) - wherein each tie rod (26) is surrounded by at least one electrically insulating centring sleeve (25), such that the first gas can flow through a space (33) between the tie rod (26) and the sleeve (25), as well as a space between the sleeve (25) and the edge of a channel - which is formed by the openings (3) in the stack of fuel cells, and **in that** the second gas can flow through the space which is formed by the apertures (6), placed one above the other in a grid, in the centre part (100) of the substrate (2).

18. Arrangement according to Claim 16 or 17, **characterized in that** the fuel cells are stacked such that the rotation direction of all the gas-carrying channels (7, 8, 9, 15) in a fuel cell is the opposite of the rotation direction of at least one of the adjacent cells.

19. Arrangement according to Claim 18, **characterized in that** a seal (110), which prevents the first gas and the second gas from mixing, is in each case arranged between two adjacent cells and essentially concentrically with respect to the opening (3).

20. Arrangement according to one of Claims 16 to 19, **characterized in that** the large separating plate (1) in a fuel cell is in electrical contact with that electrode in its adjacent cell which is located on the side of the electrolyte (17) facing away from the substrate (1).

21. Arrangement according to Claim 20, **characterized in that** the end plate (29) is electrically connected to the at least one tie rod (26) and carries the current away, and **in that** the initial plate (30) is connected to earth and makes direct electrical contact with a protective tube surrounding the centring sleeve, so that the tie rod (26) and the protective tube can be designed as poles to tap off the wanted current.

22. Arrangement according to one of Claims 16 to 21, **characterized in that** the at least one tie rod has a core which is electrically highly conductive even at high temperatures and is surrounded by a casing composed of a material which is resistant to corrosion and high temperatures.

**Revendications**

1. Cellule électrochimique en forme de disque destinée à une superposition axiale pour obtenir une pile qui est fixée à l'aide d'un tirant d'ancrage, dans laquelle la cellule électrochimique présente une ouverture (3) pour la réception du tirant d'ancrage et pour l'entrée d'un premier gaz, **caractérisé en ce que** la cellule électrochimique comprend :

   - un électrolyte conducteur d'ions (17) sous la forme d'un électrolyte en céramique résistant à des hautes températures ou d'un électrolyte polymère résistant à des basses températures ;

   - une couche cathodique poreuse (18) à titre d'électrode d'oxygène respectivement une couche anodique poreuse (19) à titre d'électrode combustible de part et d'autre de l'électrolyte (17) ;

   - un support (2) perméable aux gaz comportant une première et une deuxième surface, ainsi que des canaux pour le guidage des gaz ;

   - une petite paroi de séparation (20) qui est disposée au moins en partie sur la première surface du support (2) et qui recouvre essentiellement la zone interne de l'électrolyte (17) qui n'est pas recouverte par la cathode (18) ;

   - une grande paroi de séparation (1) conductrice de l'électricité qui est disposée sur la deuxième surface du support (2) et qui comprend des canaux pour le guidage ciblé des gaz, qui coopèrent avec des canaux du support (2).

2. Cellule électrochimique selon la revendication 1, **caractérisée en ce que** l'électrolyte (17) est disposé sur la première surface du support (2) et le support (2) est étanché au moins en partie sur sa périphérie (14), les parois de séparation (1, 20) par ailleurs séparées l'une de l'autre étant configurées de telle sorte qu'elles présentent, à proximité de l'ouverture (3) au moins une zone de contact mutuel (22) et, dans cette zone de contact (22), au moins un passage (6) pour le guidage d'un deuxième gaz en direction axiale.

3. Cellule électrochimique selon la revendication 1 ou 2, **caractérisée en ce que** le support (2) présente des canaux (4, 5) qui répartissent en un front (12) le premier gaz acheminé dans l'ouverture (3).

4. Cellule électrochimique selon l'une quelconque des revendications 1 à 3, **caractérisée en ce qu'**une partie médiane (100) du support (2) est décalée en hauteur, la petite paroi de séparation (20) s'appuyant sur la première surface et la grande paroi de séparation (1) s'appuyant sur la deuxième surface de cette partie médiane (100).

5. Cellule électrochimique selon la revendication 1, ainsi que selon la revendication 3 ou 4 (pour autant qu'elle ne se rapporte pas à la revendication 2), **caractérisée en ce que** l'électrolyte (17) est disposé sur la première surface du support (2) et le support (2) est étanché au moins en partie à sa périphérie (17), la petite paroi de séparation (20) et la partie médiane (100) étant fabriquée en une seule pièce qui présente des canaux de guidage pour les gaz (4, 5) et au moins un passage (6) pour le guidage d'un deuxième gaz en direction axiale.

6. Cellule électrochimique selon l'une quelconque des revendications précédentes, **caractérisée en ce que** la grande paroi de séparation (1) présente, sur son côté tourné vers le support (2), une multitude de canaux pour le guidage ciblé de ce premier gaz, sous la forme de canaux d'amenée (7) qui présentent d'abord une forme tronconique dans la zone d'un front (12) et par lesquelles le premier gaz est récupéré à ce front et peut être guidé de manière ciblée dans la direction de la périphérie (14) de la cellule électrochimique.

7. Cellule électrochimique selon la revendication 6, **caractérisée en ce que** les canaux d'amenée (7), dans la paroi dans la grande paroi de séparation (1) se terminent sous forme tronconique sur le côté externe d'une zone de diffusion (13).

8. Cellule électrochimique selon l'une quelconque des revendications 3 à 7, **caractérisée en ce que** la grande paroi de séparation (1) présente en outre une multitude de canaux pour le guidage ciblé du premier gaz, sous la forme de canaux d'évacuation (9), qui commencent sous forme tronconique sur le côté interne de la zone de diffusion (13), qui n'entrent pas en contact avec les canaux d'amenée (7) et qui se terminent en s'ouvrant à la périphérie (14) de la cellule électrochimique.

9. Cellule électrochimique selon l'une quelconque des revendications 3 à 8, **caractérisée en ce que** la grande paroi de séparation (1) présente en outre une multitude de canaux sous la forme de canaux de compensation de pression (8) qui sont disposées entre les canaux d'amenée (7) et d'évacuation (9) et qui n'entrent pas en contact avec lesdits canaux, en commençant sous forme tronconique sur le côté interne de la zone de diffusion (13) et en se terminant sous forme tronconique sur le côté externe de la zone de diffusion (13).

10. Cellule électrochimique selon l'une quelconque des revendications 1 à 9, **caractérisée en ce que** la grande paroi de séparation (1) présente, sur son côté se détournant du support (2), une multitude de canaux pour le guidage ciblé de ce deuxième gaz, sous la forme de canaux de passage (15).

11. Cellule électrochimique selon l'une quelconque des revendications 1 à 10, **caractérisée en ce que** les canaux (7, 8, 9, 15), à des fins de guidage ciblé des gaz, s'étendent le long de lignes continues qui sont exemptes de ramifications et qui s'écartent aussi bien de la direction radiale que de la direction tangentielle.

12. Cellule électrochimique selon l'une quelconque des revendications 1 à 10, **caractérisée en ce que** les canaux (7, 8, 9, 15), à des fins de guidage ciblé des gaz, s'étendent le long de lignes continues qui sont décrites par la formule

$$[1] \qquad \varphi = \pm\, A\, \{[(r/r_0)^2 - 1]^{0,5} - B\, \arctan\, [(r/r_0)^2 - 1]\}$$

dans laquelle A > 0 et B > 0, de telle sorte que l'on obtient, à l'intérieur d'une cellule combustible, un sens de rotation de l'ensemble des lignes,

$\varphi$     représentant l'angle mesurée à partir d'une ligne de référence passant par l'origine ;

r     représentant un rayon variable mesuré à partir de l'origine ;

$r_0$     représentant un rayon de référence mesuré à partir de l'origine.

13. Cellule électrochimique selon la revendication 12, **caractérisé en ce que**, dans la formule [1], 0 < A < 2 et 0 < B < 2.

14. Cellule électrochimique selon la revendication 12, **caractérisé en ce que**, dans la formule [1], A = 1 et B = 1.

15. Cellule électrochimique selon l'une quelconque des revendications 12 à 14, **caractérisée en ce que** les canaux (7, 8, 9, 15), à des fins de guidage ciblé des gaz, s'étendent le long de lignes continues et/ou discontinues qui s'approchent de la courbe qui est définie par la formule [1].

16. Agencement de cellules électrochimiques selon l'une quelconque des revendications 1 à 4 et/ou 6 à 15, **caractérisé en ce que** les cellules électrochimiques sont superposées en direction axiale pour former une pile qui est fixée par au moins un tirant d'ancrage (26) - agissant entre une plaque initiale (30) et une plaque terminale (29) -, dans lequel chaque tirant d'ancrage (26) est entouré par au moins un manchon de centrage (25) procurant une isolation électrique, de telle sorte que l'espace libre (33) ménagé entre le tirant d'ancrage (26) et le manchon (25), ainsi que l'espace libre ménagé entre le manchon (25) et le bord d'un canal - formé par les ouvertures (3) de la pile de cellules électrochimiques - peut être traversé par le premier gaz et **en ce que** l'espace libre que l'on obtient entre les passages (6) pratiqués dans les zones de contact réciproque (22) des parois de séparation (1, 20), placés en registre l'un par-dessus l'autre, peut être traversé par le deuxième gaz.

17. Agencement de cellules électrochimiques selon la revendication 16 ou 17, **caractérisé en ce que** les cellules électrochimiques sont superposées en direction axiale pour former une pile qui est fixée par au moins un tirant d'ancrage (26) - agissant entre une plaque initiale (30) et une plaque terminale (29) -, dans lequel chaque tirant d'ancrage (26) est entouré par au moins un manchon de centrage (25) procurant une isolation électrique, de telle sorte que l'espace libre (33) ménagé entre le tirant d'ancrage (26) et le manchon (25), ainsi que l'espace libre ménagé entre le manchon (25) et le bord d'un canal - formé par les ouvertures (3) de la pile de cellules électrochimiques - peut être traversé par le premier gaz et **en ce que** l'espace libre que l'on obtient entre les passages (6) pratiqués dans la partie médiane (100) du support (2), placés en registre l'un par-dessus l'autre, peut être traversé par le deuxième gaz.

18. Agencement de cellules électrochimiques selon la revendication 16 ou 17, **caractérisé en ce que** les cellules électrochimiques sont superposées de telle sorte que le sens de rotation des canaux 7, 8, 9, 15 de guidage des gaz d'une cellule électrochimique est contraire au .sens de rotation d'au moins une cellule voisine.

19. Agencement selon la revendication 18, **caractérisé en ce qu'**on dispose un joint d'étanchéité (110) respectivement entre deux cellules voisines et essentiellement en position concentrique à l'ouverture (3), qui empêche un mélange du premier et du deuxième gaz.

20. Agencement selon l'une quelconque des revendications 16 à 19, **caractérisé en ce que** la grande paroi de séparation (1) d'une cellule électrochimique entre en contact électrique avec l'électrode de sa cellule voisine qui se trouve sur le côté de l'électrolyte (17) se détournant du support (2).

21. Agencement selon la revendication 20, **caractérisé en ce que** la plaque terminale (29) est reliée électriquement à au moins un tirant d'ancrage (26) et évacue le courant, et **en ce que** la plaque initiale (30) est reliée à la terre et entre en contact électrique direct avec un tube de protection entourant le manchon de centrage, de telle sorte que le tirant d'ancrage (26) et le tube de protection peuvent être réalisés sous forme de pôles pour prélever le courant d'utilisation.

22. Agencement selon l'une quelconque des revendications 16 a 21, **caractérisé en ce que** ledit ou lesdits tirants d'ancrage possèdent un noyau bon conducteur d'électricité également à des températures élevées, qui est entouré par une enveloppe constituée d'une matière résistant à la corrosion et aux températures élevées.

Fig. 1

Fig. 2

H₂O

O₂        H₂

# Fig. 3

Fig. 4

a)

b)

c)

d)

e)

f)

Fig. 5

a)

b)

c)

d)

Fig. 6

Fig. 7

6

101

102

O

A

20

a)

Fig. 8

110    20    2

b) A-O

101    1

Fig. 9

6

104

A

20

O

a)

Fig. 10

110   20   2

b) A-O

104   1

6

A

105

a)

Fig. 11

110

2

b) A-0

105

1

6

105

106

a)

*Fig. 12*

110   106   2

b) A-O

105   1

Fig. 13